# EUROPEAN PATENT SPECIFICATION

(11) **EP 3 301 530 B1**
(45) Date of publication and mention of the grant of the patent: **04.12.2019**
(21) Application number: 17001612.5
(22) Date of filing: 28.09.2017
(51) Int. Cl.: G05D 1/00

(54) **CONTROL METHOD OF AUTONOMOUS VEHICLE AND SERVER**
STEUERUNGSVERFAHREN FÜR AUTONOMES FAHRZEUG UND SERVER
PROCÉDÉ DE COMMANDE DE VÉHICULE AUTONOME ET SERVEUR

(30) Priority: 30.09.2016 KR 20160126643
(43) Date of publication of application: 04.04.2018
(73) Proprietor: LG ELECTRONICS INC., Yeongdeungpo-gu Seoul 07336 (KR)
(72) Inventor: Taekyung, Lee, Seoul 06772 (KR); Hyunseok, Shin, Seoul 06772 (KR); Junyoung, Yu, Seoul 06772 (KR)
(74) Representative: Beyer, Andreas

(56) References cited:
- DE-A1-102014 224 645
- DE-A1-102016 001 264
- US-A1- 2006 089 800
- US-A1- 2011 130 894
- US-A1- 2014 207 535

## Description

### CROSS-REFERENCE TO RELATED APPLICATION

This application claims an earlier filing date and right of priority to Korean Patent Application No. 10-2016-0126643, filed on September 30, 2016 in the Korean Intellectual Property Office, the contents of which is incorporated herein by reference in its entirety.

### TECHNICAL FIELD

The present disclosure relates to an autonomous vehicle and a control method thereof.

### BACKGROUND

A vehicle is an apparatus that moves in a direction desired by a user riding therein. A representative example of a vehicle may be an automobile.

A variety of sensors and electronic devices are being mounted in vehicles to enhance user convenience. For example, an Advanced Driver Assistance System (ADAS) is being actively studied for user driving convenience. In addition, autonomous vehicles are under active development. DE 10 2016 001264 A1 discloses that an unmanned remote controller can operate a vehicle.

DE 10 2014 224 645 A1 relates to a controller of a vehicle. In the controller, an unfit driving condition of the driver is detected or determined by the vehicle. When an emergency in which the driver has reached an unable-to-drive state is detected or determined, the result of the detection or determination is notified to the outside. A lead vehicle that is adapted to lead the vehicle based on the notification is recognized. An automatic follow-up control is performed causing the vehicle to automatically follow the lead vehicle.

### SUMMARY

The present invention is defined in the independent claims. Specific embodiments are set out in the respective dependent claims.

Techniques, control methods of an autonomous vehicle, methods for determining whether the autonomous vehicle needs to be remotely controlled, and a server implementing the method are described herein.

In one aspect, a control method for an autonomous vehicle includes: acquiring, by a server, information related to the vehicle; determining, by the server and based on the acquired information, that the vehicle needs to be remotely controlled; and based on the determination that the vehicle needs to be remotely controlled, remotely controlling the vehicle by the server or a nearby object.

Implementations may include one or more of the following features. For example, the acquiring of the information related to the vehicle includes acquiring, by the server, at least one of information transmitted by the vehicle or information transmitted by the nearby object.

In some implementations, the vehicle is in autonomous mode, the acquired information is error information indicating that an error has occurred in the vehicle, and the determining includes: determining that an error associated with an operation system of the vehicle has occurred based on the error information; and based on the determination that an error associated with the operation system of the vehicle has occurred, determining, by the server, that the vehicle needs to be remotely controlled.

In some implementations, the acquired information is information necessary for driving the vehicle in autonomous mode, and the determining includes: determining that an amount of the acquired information is equal to or greater than a preset level; and based on the determination that the amount of the acquired information is equal to or greater than the preset level, determining, by the server, that the vehicle needs to be remotely controlled.

In some implementations, the vehicle is in autonomous mode, and the determining includes: determining that an error associated with an autonomous driving function of the vehicle has occurred based on the acquired information; and based on the determination that an error associated with an autonomous driving function of the vehicle has occurred, determining, by the server, that the vehicle needs to be remotely controlled.

In some implementations, the acquired information is the information transmitted by the vehicle, and the determining includes: determining that a discrepancy exists between information related to driving of the vehicle stored on the server and the information transmitted by the vehicle; and based on the determination that a discrepancy exists between information related to driving of the vehicle stored on the server and the information transmitted by the vehicle, determining, by the server, that the vehicle needs to be remotely controlled.

In some implementations, the acquired information transmitted by the vehicle includes driver condition information and vehicle condition information, and the determining includes: determining at least one of: that an occupant of the vehicle is unable to drive the vehicle in manual mode; or that an error associated with an autonomous driving function of the vehicle has occurred while the vehicle is in autonomous mode, and based on at least one of the determination that the occupant of the vehicle is unable to drive the vehicle in manual mode or the determination that an error associated with an autonomous driving function of the vehicle has occurred while the vehicle is in autonomous mode, determining, by the server, that the vehicle needs to be remotely controlled.

In some implementations, the determining further includes: determining, based on the driver condition information, that an occupant of the vehicle is unable to drive the vehicle; based on the determination that the occupant of the vehicle is unable to drive the vehicle, determining, based on the vehicle condition information, whether an error associated with an autonomous driving function of the vehicle has occurred; based on the determination that an error associated with an autonomous driving function of the vehicle has occurred, determining, by the server, that the vehicle needs to be remotely controlled; and based on the determination that an error associated with an autonomous driving function of the vehicle has not occurred, transmitting, by the server, a control mode switching signal that switches the vehicle to autonomous mode.

In some implementations, the acquired information is information transmitted by the nearby object, and the determining includes: determining that an error associated with an autonomous driving function of the vehicle has occurred based on the information transmitted by the nearby object; and based on the determination that an error associated with an autonomous driving function of the vehicle has occurred, determining, by the server, that the vehicle needs to be remotely controlled.

In some implementations, the nearby object includes a nearby vehicle or an infrastructure within a predetermined distance from the vehicle, and the remotely controlling includes: determining, by the server, that the nearby vehicle or the infrastructure has a capability to remotely control the vehicle; based on the determination that the nearby vehicle or the infrastructure has a capability to remotely control the vehicle, requesting, by the server, the nearby vehicle or the infrastructure to remotely control the vehicle; and remotely controlling the vehicle by the nearby vehicle or the infrastructure.

In some implementations, the control method includes: before the requesting, determining which one among the server, the nearby vehicle, and the infrastructure has the highest communication quality with the vehicle; based on a determination that the server has the highest communication quality with the vehicle, remotely controlling the vehicle by the server; and based on a determination that the nearby vehicle or the infrastructure has the highest communication quality with the vehicle, requesting, by the server, the nearby vehicle or the infrastructure to remotely control the vehicle.

In some implementations, the vehicle needs to be remotely controlled, and the control method includes: before the remotely controlling, determining, by the server, that an occupant of the vehicle is able to drive the vehicle; based on a determination that the occupant is able to drive the vehicle, controlling, by the server, the vehicle to instruct an output unit of the vehicle to output a driving mode selection menu; determining whether manual mode or remote control mode is selected by the occupant from the output driving mode selection menu; based on a determination that manual mode is selected from the driving mode selection menu, switching the vehicle to manual mode; and based on a determination that remote control mode is selected from the driving mode selection menu, remotely controlling the vehicle by the server. In some implementations, the control method includes: before the determining whether an occupant is able to drive the vehicle, determining, by the server, whether the vehicle is in an emergency situation; based on a determination that the vehicle is in an emergency situation, remotely controlling the vehicle by the server; and based on a determination that the vehicle is not in an emergency situation, determining whether the occupant is able to drive the vehicle.

In some implementations, the control method includes: receiving a switch-to-manual command; and switching the vehicle from remote control mode to manual mode based on the received switch-to-manual command. In some implementations, the control method includes: before the switching of the vehicle to manual mode, determining whether an occupant of the vehicle is able to drive the vehicle; based on a determination that the occupant is unable to drive the vehicle, maintaining remote control of the vehicle by the server; and based on a determination that the occupant is able to drive the vehicle, switching the vehicle to manual mode.

In some implementations, the control method includes: before the remotely controlling, determining that the server is unable to remotely control the vehicle; and based on the determination that the server is unable to remotely control the vehicle, performing an emergency maneuver by the vehicle. In some implementations, the control method includes: during the performing of the emergency maneuver by the vehicle, performing at least one of: transmitting, by the vehicle or the server, information related to the emergency maneuver to a nearby vehicle within a predetermined distance from the vehicle; or requesting, by the vehicle or the server, the nearby vehicle to perform a cooperative control.

In another aspect, a server includes: a communication unit configured to acquire information related to a vehicle; and at least one processor configured to: determine, based on the acquired information, that the vehicle needs to be remotely controlled; and based on the determination that the vehicle needs to be remotely controlled, perform one of: transmitting a remote control signal for remotely controlling the vehicle; or requesting a nearby vehicle to remotely control the vehicle.

Implementations may include one or more of the following features. For example, the acquired information transmitted by the vehicle includes driver condition information and vehicle condition information, and the at least one processor is configured to: determine, based on the driver condition information, that an occupant is unable to drive the vehicle and determine, based on the vehicle condition information, that an error associated with an autonomous driving function of the vehicle has occurred; and based on a determination that the occupant is unable to drive the vehicle and a determination that an error associated with an autonomous driving function of the vehicle has occurred, determine that the vehicle needs to be remotely controlled.

All or part of the features described throughout this application may be implemented as a computer program product including instructions that are stored on one or more non-transitory machine-readable storage media, and that are executable on one or more processing devices. All or part of the features described throughout this application may be implemented as an apparatus, method, or electronic system that may include one or more processing devices and memory to store executable instructions to implement the stated functions.

The details of one or more implementations are set forth in the accompanying drawings and the description below. Other features will be apparent from the description and drawings, and from the claims. The description and specific examples below are given by way of illustration only, and various changes and modifications will be apparent.

### BRIEF DESCRIPTION OF THE DRAWINGS

FIG. 1 is a diagram illustrating an example of an exterior of a vehicle;
FIG. 2 is a diagram illustrating an example of a vehicle at various angles;
FIGS. 3 and 4 are views illustrating an interior portion of an example of a vehicle;
FIGS. 5 and 6 are reference views illustrating examples of objects that are relevant to driving;
FIG. 7 is a block diagram illustrating subsystems of an example of a vehicle;
FIG. 8 is a block diagram illustrating a server;
FIG. 9 is a diagram illustrating an example of a control method of an autonomous vehicle;
FIG. 10 is a diagram illustrating communication between a server, an infrastructure, and nearby vehicles for remotely controlling the vehicle; and
FIGS. 11 to 21 are diagrams illustrating examples of control methods of an autonomous vehicle.

### DETAILED DESCRIPTION

An autonomous vehicle may operate in a mode selected from among an autonomous mode, a manual mode, and a remote control mode. The autonomous mode indicates operation without control of a driver, the manual mode indicates operation in accordance with a control input of the driver, and the remote control mode indicates remotely controlled operation by an external device. The autonomous vehicle may need to switch to the remote control mode according to vehicle condition or surrounding environment.

Techniques, control methods of an autonomous vehicle, methods for determining whether the autonomous vehicle needs to be remotely controlled, and a server implementing the method is described herein.

In some implementations, the method enables remote control of the autonomous vehicle despite poor communication with the autonomous vehicle by communicating with a nearby vehicle or infrastructure. The method may improve safety of autonomous driving by performing emergency maneuver when remote control of the autonomous vehicle is not possible.

In accordance with an implementation of the present disclosure, a control method of an autonomous vehicle includes: acquiring, by a server, information related to the vehicle; determining, by the server, based on the acquired information, whether the vehicle needs to be remotely controlled; and, when it is determined that the vehicle needs to be remotely controlled, remotely controlling the vehicle by the server or a nearby object.

In accordance with an implementation of the present disclosure, a server is provided, the server including a communication unit configured to acquire information related to a vehicle, and a processor configured to: determine, based on the acquired information, whether the vehicle needs to be remotely controlled; and, when it is determined that the vehicle needs to be remotely controlled, either transmit a remote control signal for the purpose of remote controlling the vehicle or request a nearby vehicle, which is able to remotely control the vehicle, to remotely control the vehicle.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In the following description, "the left side of the vehicle" refers to the left side in the forward driving direction of the vehicle, and "the right side of the vehicle" refers to the right side in the forward driving direction of the vehicle.

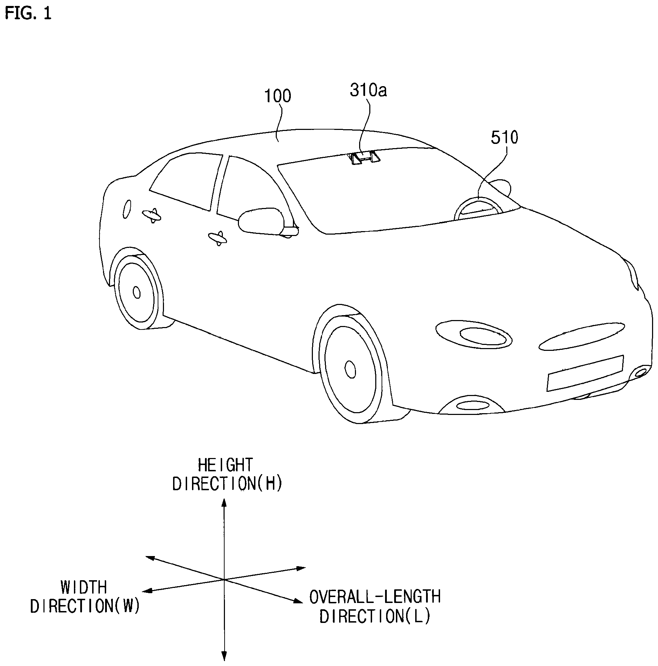

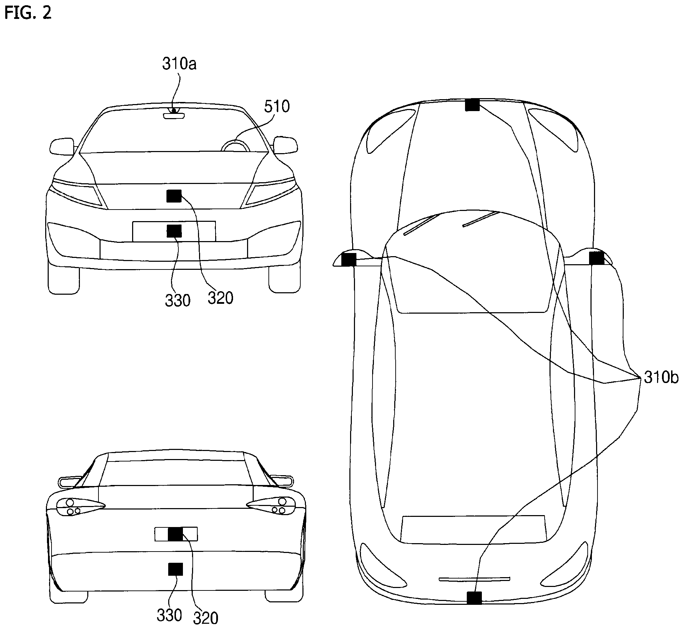

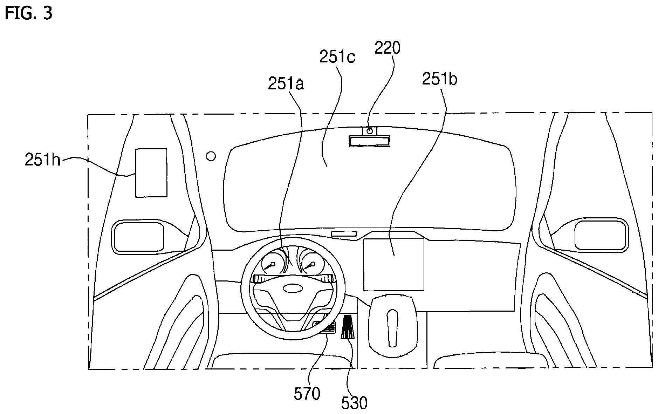

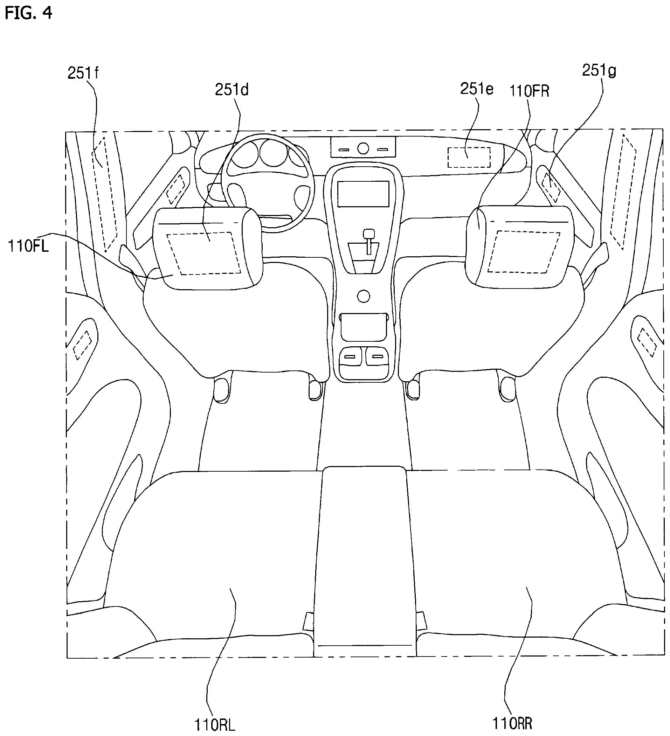

FIG. 1 illustrates an example of an exterior of a vehicle; FIG. 2 illustrates an example of a vehicle at various angles; and FIGS. 3 and 4 illustrate an interior portion of an example of a vehicle.

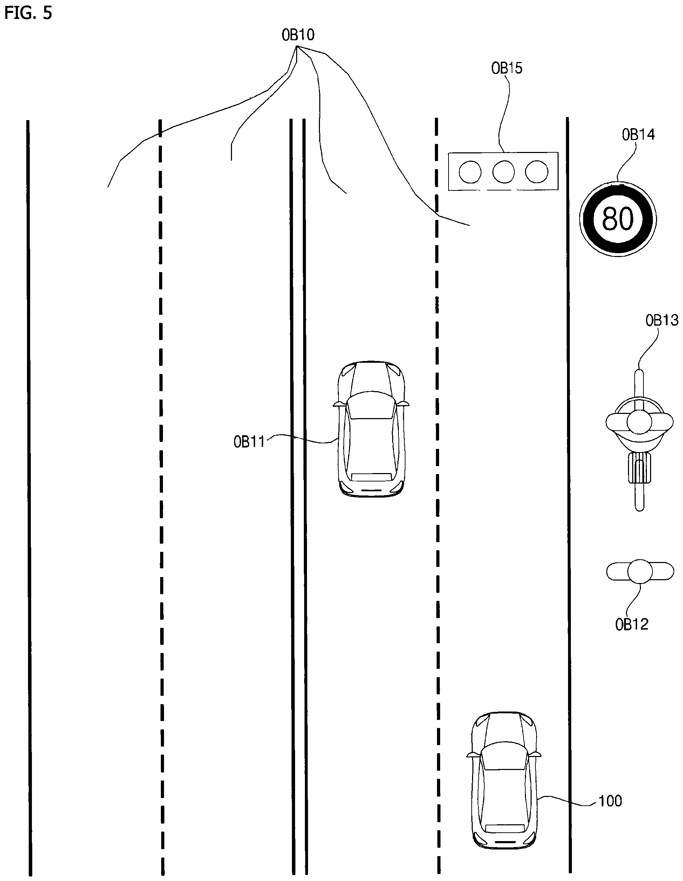

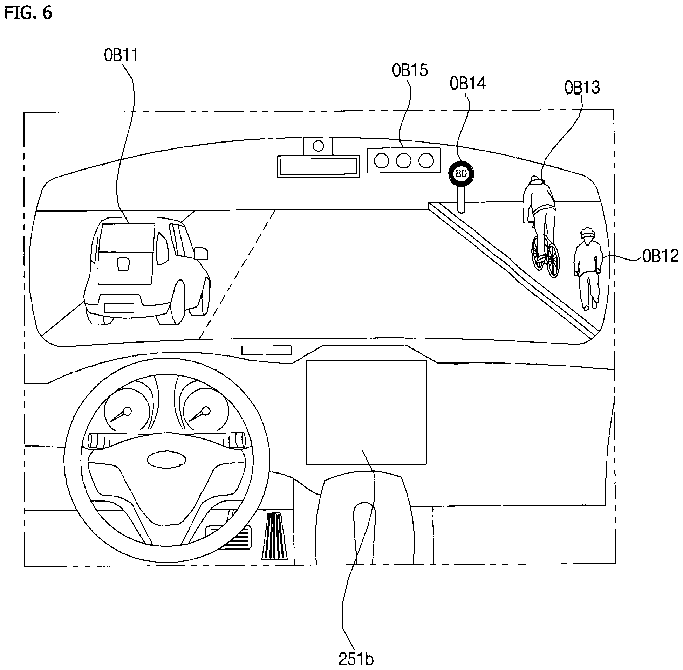

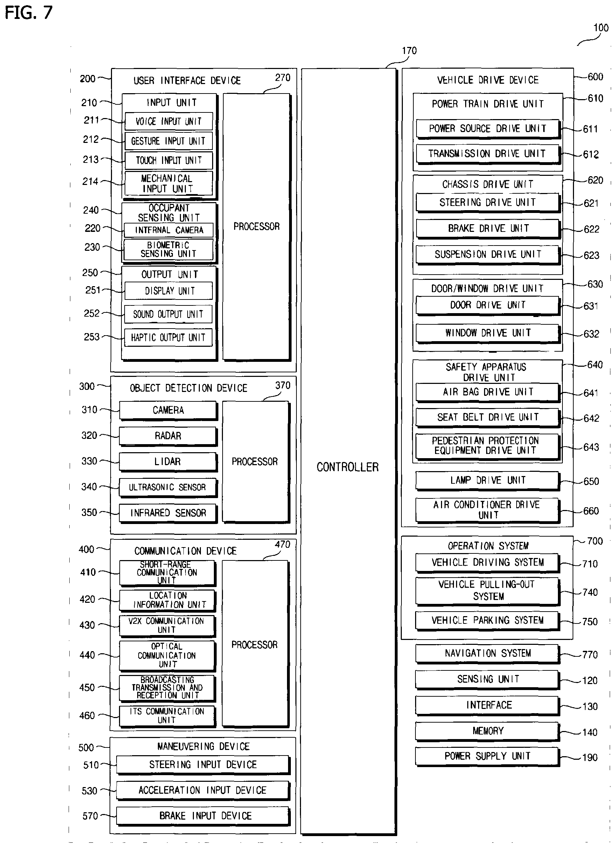

FIGS. 5 and 6 illustrate examples of objects that are relevant to driving; and FIG. 7 illustrate subsystems of an example of a vehicle.

Referring to FIGS. 1 to 7, a vehicle 100 may include a plurality of wheels, which are rotated by a power source, and a steering input device 510 for controlling a driving direction of the vehicle 100.

The vehicle 100 may be an autonomous vehicle.

The vehicle 100 may be remotely controlled by an external device. The external device may be a server, a mobile terminal, and a nearby vehicle. For example, based on the determination that the vehicle 100 needs to be remotely controlled, the server may remotely control the vehicle 100. Detailed description thereof will be provided later.

A control mode of the vehicle 100 may be a mode indicating an entity in charge of controlling the vehicle 100. For the control mode of the vehicle 100 may include an autonomous mode in which the controller 170 or the operation system 700 of the vehicle 100 controls the vehicle 100, a manual mode in which a driver of the vehicle 100 controls the vehicle 100, and a remote control mode in which a device other than the vehicle 100 controls the vehicle 100.

When the vehicle 100 is in the autonomous mode, the controller 170 or the operation system 700 may control the vehicle 100. As a result, the vehicle 100 is able to travel without manipulation of the driver.

When the vehicle 100 is in the manual mode, the driver of the vehicle 100 may control the vehicle 100.

When the vehicle 100 is in the remote control mode, the device other than the vehicle 100 may control the vehicle 100. The vehicle 100 may be controlled based on a remote control signal transmitted by the device.

Based on a user input received through the user interface apparatus 200, the vehicle 100 may enter one of the autonomous mode, the manual mode, and the remote control mode.

The control mode of the vehicle 100 may be switched to one of the autonomous mode, the manual mode, and the remote control mode based on at least one of driver condition information, vehicle driving information, and the vehicle condition information.

The driver condition information may be generated based on images of a driver captured by the internal camera 220 or the driver's biometric information sensed by the biometric sensing unit 230. For example, the driver condition information may be images about a gaze, face, a behavior, facial expression, and a location of the driver, which are acquired by the internal camera 220. For example, the driver condition information may be information generated by a user's biometric information acquired by the biometric sensing unit 230.

For example, the driver condition information may indicate the driver's gaze direction, whether the driver is dozing off, the driver's health condition, and the driver's emotional state.

The driver condition information may be generated via the user interface apparatus 200, and provided to the controller 170.

The vehicle driving information may be generated based on object information provided by the object detection apparatus 300 or based on information received through the communication apparatus 400. For example, the vehicle driving information may include location information of the vehicle 100, nearby vehicle information received from a nearby vehicle, and navigation information which includes route information of the vehicle 100 and map information.

For example, the vehicle driving information may indicate the following: a type, a location, and movement of an object in the vicinity of the vehicle 100; whether there is a lane in the vicinity of the vehicle 100; whether nearby vehicles are travelling at a time when the vehicle 100 is in a stop; whether there is a space available to park in the vicinity of the vehicle 100; a probability that the vehicle 100 collides with an object; a location of any pedestrian or bicycle in the vicinity of the vehicle 100; a type of the roadway on which the vehicle 100 is travelling; the current traffic signal indicated by a traffic light in the vicinity of the vehicle 100; and movement of the vehicle.

The vehicle driving information may be generated via the object detection apparatus 300, the communication apparatus 400, the navigation system 770, the sensing unit 120, and the interface130, and provided to the controller 170.

The vehicle condition information may be information related to a state of each unit of the vehicle 100. For example, the vehicle condition information may include: information on an operational status of each of the user interface apparatus 200, the object detection apparatus 300, the communication apparatus 400, the driving manipulation apparatus 500, the vehicle drive apparatus 600, and the operation system 700; and information indicating whether any unit has an error.

For example, the vehicle condition information may indicate whether the vehicle 100 receives a GPS signal properly, whether an error has occurred in at least one sensor of the vehicle 100, and whether each device in the vehicle 100 operates properly.

The control mode of the vehicle 100 may be switched to one of the autonomous mode, the manual mode, and the remote control mode based on various types of information.

For example, based on object information generated by the object detection apparatus 300, the control mode of the vehicle 100 may be switched from the manual mode to the autonomous mode, or from the autonomous mode to the manual mode.

In another example, based on information received through the communication apparatus 400, the control mode of the vehicle 100 may be switched from the manual mode to the autonomous mode, or from the autonomous mode to the manual mode.

In yet another example, based on information, data, or a signal provided from an external device, the control mode of the vehicle 100 may be switched from the manual mode to the autonomous mode, or from the autonomous mode to the manual mode.

In the autonomous mode, the vehicle 100 may operate based on the operation system 700.

For example, in the autonomous mode, the vehicle 100 may operate based on information, data, or a signal generated by a driving system 710, a vehicle pulling-out system 740, and a vehicle parking system 750.

In the manual mode, the autonomous vehicle 100 may receive a user input for driving of the vehicle 100 through the driving manipulation apparatus 500. The vehicle 100 may operate based on the user input received through the driving manipulation apparatus 500.

In the remote control mode, the vehicle 100 may receive a remote control signal transmitted by an external device through the communication apparatus 400. The vehicle 100 may be controlled based on the remote control signal.

The term "overall length" means the length from the front end to the rear end of the vehicle 100, the term "overall width" means the width of the vehicle 100, and the term "overall height" means the height from the bottom of the wheel to the roof. In the following description, the term "overall length direction L" may mean the reference direction for the measurement of the overall length of the vehicle 100, the term "overall width direction W" may mean the reference direction for the measurement of the overall width of the vehicle 100, and the term "overall height direction H" may mean the reference direction for the measurement of the overall height of the vehicle 100.

As illustrated in FIG. 7, the vehicle 100 may include the user interface apparatus 200, the object detection apparatus 300, the communication apparatus 400, the driving manipulation apparatus 500, a vehicle drive apparatus 600, the operation system 700, a navigation system 770, a sensing unit 120, an interface 130, a memory 140, at least one processor such as controller 170, and a power supply unit 190.

In some implementations, the vehicle 100 may further include other components in addition to the aforementioned components, or may not include some of the aforementioned components.

The user interface apparatus 200 is provided to support communication between the vehicle 100 and a user. The user interface apparatus 200 may receive a user input, and provide information generated in the vehicle 100 to the user. The vehicle 100 may enable User Interfaces (UI) or User Experience (UX) through the user interface apparatus 200.

The user interface apparatus 200 may include an input unit 210, an internal camera 220, a biometric sensing unit 230, an output unit 250, and at least one processor, such as processor 270.

In some implementations, the user interface apparatus 200 may further include other components in addition to the aforementioned components, or may not include some of the aforementioned components.

The input unit 210 is configured to receive information from a user, and data collected in the input unit 210 may be analyzed by the processor 270 and then processed into a control command of the user.

The input unit 210 may be disposed inside the vehicle 100. For example, the input unit 210 may be disposed In a region of a steering wheel, a region of an instrument panel, a region of a seat, a region of each pillar, a region of a door, a region of a center console, a region of a head lining, a region of a sun visor, a region of a windshield, or a region of a window.

The input unit 210 may include a voice input unit 211, a gesture input unit 212, a touch input unit 213, and a mechanical input unit 214.

The voice input unit 211 may convert a voice input of a user into an electrical signal. The converted electrical signal may be provided to the processor 270 or the controller 170.

The voice input unit 211 may include one or more microphones.

The gesture input unit 212 may convert a gesture input of a user into an electrical signal. The converted electrical signal may be provided to the processor 270 or the controller 170.

The gesture input unit 212 may include at least one selected from among an infrared sensor and an image sensor for sensing a gesture input of a user.

In some implementations, the gesture input unit 212 may sense a three-dimensional (3D) gesture input of a user. To this end, the gesture input unit 212 may include a plurality of light emitting units for outputting infrared light, or a plurality of image sensors.

The gesture input unit 212 may sense the 3D gesture input by employing a Time of Flight (TOF) scheme, a structured light scheme, or a disparity scheme.

The touch input unit 213 may convert a user's touch input into an electrical signal. The converted electrical signal may be provided to the processor 270 or the controller 170.

The touch input unit 213 may include a touch sensor for sensing a touch input of a user.

In some implementations, the touch input unit 210 may be formed integral with a display unit 251 to Implement a touch screen. The touch screen may provide an input interface and an output interface between the vehicle 100 and the user.

The mechanical input unit 214 may include at least one selected from among a button, a dome switch, a jog wheel, and a jog switch. An electrical signal generated by the mechanical input unit 214 may be provided to the processor 270 or the controller 170.

The mechanical input unit 214 may be located on a steering wheel, a center fascia, a center console, a cockpit module, a door, etc.

An occupant sensing unit 240 may sense an occupant inside the vehicle 100. The occupant sensing unit 240 may include the internal camera 220 and the biometric sensing unit 230.

The internal camera 220 may acquire images of the inside of a vehicle. The processor 270 may sense a user's condition based on the images of the inside of the vehicle. For example, the sensed condition of the user may be about a gaze, face, a behavior, facial expression, and a location of the driver.

The processor may acquire information on the gaze, face, behavior, facial expression, and location of the driver from the images of the inside of the vehicle. The processor 270 may acquire information on a user's gesture from the images of the inside of the vehicle. The information acquired by the processor 270 from the images of the inside of the vehicle may be driver condition information. In this case, the driver condition information may indicate a driver's gaze direction, behavior, facial expression, and gesture. The processor 270 may provide the driver condition information, acquired from the images of the inside of the vehicle, to the controller 170.

The biometric sensing unit 230 may acquire biometric information of the user. The biometric sensing unit 230 may include a sensor for acquire biometric information of the user, and may utilize the sensor to acquire a user's finger print information, heart rate information, brain wave information, etc. The biometric information may be used for user authentication or for determination of a user's condition.

The processor 270 may determine a driver's condition based on the driver's biometric information. The information acquired by the processor 270 by determining the driver's condition may be driver condition information. The driver condition information may indicate whether the driver is in a faint, dozing off, too excited, or in an emergency situation. The processor 270 may provide the controller 170 with the driver condition information that is acquired from the driver's biometric information.

The output unit 250 is configured to generate a visual, audio, or tactile output.

The output unit 250 may include at least one of a display unit 251, a sound output unit 252, and a haptic output unit 253.

The display unit 251 may display graphic objects corresponding to various types of information.

The display unit 251 may include at least one selected from among a Liquid Crystal Display (LCD), a Thin Film Transistor-Liquid Crystal Display (TFT LCD), an Organic Light-Emitting Diode (OLED), a flexible display, a 3D display, and an e-ink display.

The display unit 251 may form an inter-layer structure together with the touch input unit 213, or may be integrally formed with the touch input unit 213 to implement a touch screen.

The display unit 251 may be implemented as a Head Up Display (HUD). When implemented as a HUD, the display unit 251 may include a projector module in order to output information through an image projected on a windshield or a window.

The display unit 251 may include a transparent display. The transparent display may be attached on the windshield or the window.

The transparent display may display a predetermined screen with a predetermined transparency. In order to achieve the transparency, the transparent display may include at least one selected from among a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display may be adjustable.

Meanwhile, the user interface apparatus 200 may include a plurality of display units 251a to 251g.

The display unit 251 may be disposed in a region 251a of a steering wheel, a region 251b or 251e of an instrument panel, a region 251d of a seat, a region 251f of each pillar, a region 251g of a door, a region of a center console, a region of a head lining, a region of a sun visor, a region 251c of a windshield, or a region 251h of a window.

The sound output unit 252 converts an electrical signal from the processor 270 or the controller 170 into an audio signal, and outputs the audio signal. To this end, the sound output unit 252 may include one or more speakers.

The haptic output unit 253 generates a tactile output. For example, the haptic output unit 253 may operate to vibrate a steering wheel, a safety belt, and seats 110FL, 110FR, 110RL, and 110RR so as to allow a user to recognize the output.

The processor 270 may control the overall operation of each unit of the user interface apparatus 200.

In some implementations, the user interface apparatus 200 may include a plurality of processors 270 or may not include the processor 270.

In a case where the user interface apparatus 200 does not include the processor 270, the user interface apparatus 200 may operate under control of the controller 170 or a processor of a different device inside the vehicle 100.

Meanwhile, the user interface apparatus 200 may be referred to as a display device for vehicle.

The user interface apparatus 200 may operate under control of the controller 170.

The object detection apparatus 300 is used to detect an object outside the vehicle 100.

The object may include various objects related to travelling of the vehicle 100.

Referring to FIGS. 5 and 6, an object OB may include a lane OB10, a nearby vehicle OB11, a pedestrian OB12, a two-wheeled vehicle OB13, a traffic signal OB14 and OB15, a light, a road, a structure, a bump, a geographical feature, an animal, etc.

The lane OB10 may be a lane in which the vehicle 100 is traveling (hereinafter, referred to as the current driving lane), a lane next to the current driving lane, and a lane in which a vehicle travelling in the opposite direction is travelling. The lane OB10 may include left and right lines that define the lane.

The nearby vehicle OB11 may be a vehicle that is travelling in the vicinity of the vehicle 100. The nearby vehicle OB11 may be a vehicle within a predetermined distance from the vehicle 100. For example, the nearby vehicle OB11 may be a vehicle that is preceding or following the vehicle 100.

The pedestrian OB12 may be a person in the vicinity of the vehicle 100. The pedestrian OB12 may be a person within a predetermined distance from the vehicle 100. For example, the pedestrian OB12 may be a person on a sidewalk or on the roadway.

The two-wheeled vehicle OB13 is a vehicle that is located in the vicinity of the vehicle 100 and moves with two wheels. The two-wheeled vehicle OB13 may be a vehicle that has two wheels within a predetermined distance from the vehicle 100. For example, the two-wheeled vehicle OB13 may be a motorcycle or a bike on a sidewalk or the roadway.

The traffic signal may include a traffic light OB15, a traffic sign plate OB14, and a pattern or text painted on a road surface.

The light may be light generated by a lamp provided in the nearby vehicle. The light may be light generated by a street light. The light may be solar light.

The road may include a road surface, a curve, and slopes, such as an upward slope and a downward slope.

The structure may be a body located around the road in the state of being fixed onto the ground. For example, the structure may include a streetlight, a roadside tree, a building, a traffic light, and a bridge.

The geographical feature may include a mountain and a hill.

Meanwhile, the object may be classified as a movable object or a stationary object. For example, the movable object may include a nearby vehicle and a pedestrian. For example, the stationary object may include a traffic signal, a road, and a structure.

The object detection apparatus 300 may include a camera 310, a radar 320, a lidar 330, an ultrasonic sensor 340, an infrared sensor 350, and a processor 370.

In some implementations, the object detection apparatus 300 may further include other components in addition to the aforementioned components, or may not include some of the aforementioned components.

The camera 310 may be located at an appropriate position outside the vehicle 100 in order to acquire images of the outside of the vehicle 100. The camera 310 may be a mono camera, a stereo camera 310a, an Around View Monitoring (AVM) camera 310b, or a 360-degree camera.

For example, the camera 310 may be disposed near a front windshield in the vehicle 100 in order to acquire images of the front of the vehicle 100. Alternatively, the camera 310 may be disposed around a front bumper or a radiator grill.

In another example, the camera 310 may be disposed near a rear glass in the vehicle 100 in order to acquire images of the rear of the vehicle 100. Alternatively, the camera 310 may be disposed around a rear bumper, a trunk, or a tailgate.

In yet another example, the camera 310 may be disposed near at least one of the side windows in the vehicle 100 in order to acquire images of the side of the vehicle 100. Alternatively, the camera 310 may be disposed around a side mirror, a fender, or a door.

The camera 310 may provide an acquired image to the processor 370.

The radar 320 may include an electromagnetic wave transmission unit and an electromagnetic wave reception unit. The radar 320 may be realized as a pulse radar or a continuous wave radar depending on the principle of emission of an electronic wave. In addition, the radar 320 may be realized as a Frequency Modulated Continuous Wave (FMCW) type radar or a Frequency Shift Keying (FSK) type radar depending on the waveform of a signal.

The radar 320 may detect an object through the medium of an electromagnetic wave by employing a time of flight (TOF) scheme or a phase-shift scheme, and may detect a location of the detected object, the distance to the detected object, and the speed relative to the detected object.

The radar 320 may be located at an appropriate position outside the vehicle 100 in order to sense an object located in front of the vehicle 100, an object located to the rear of the vehicle 100, or an object located to the side of the vehicle 100.

The lidar 330 may include a laser transmission unit and a laser reception unit. The lidar 330 may be implemented by the TOF scheme or the phase-shift scheme.

The lidar 330 may be implemented as a drive type lidar or a non-drive type lidar.

When implemented as the drive type lidar, the lidar 300 may rotate by a motor and detect an object in the vicinity of the vehicle 100.

When implemented as the non-drive type lidar, the lidar 300 may utilize a light steering technique to detect an object located within a predetermined distance from the vehicle 100.

The lidar 330 may detect an object through the medium of laser light by employing the TOF scheme or the phase-shift scheme, and may detect a location of the detected object, the distance to the detected object, and the speed relative to the detected object.

The lidar 330 may be located at an appropriate position outside the vehicle 100 in order to sense an object located in front of the vehicle 100, an object located to the rear of the vehicle 100, or an object located to the side of the vehicle 100.

The ultrasonic sensor 340 may include an ultrasonic wave transmission unit and an ultrasonic wave reception unit. The ultrasonic sensor 340 may detect an object based on an ultrasonic wave, and may detect a location of the detected object, the distance to the detected object, and the speed relative to the detected object.

The ultrasonic sensor 340 may be located at an appropriate position outside the vehicle 100 in order to detect an object located in front of the vehicle 100, an object located to the rear of the vehicle 100, and an object located to the side of the vehicle 100.

The infrared sensor 350 may include an infrared light transmission unit and an infrared light reception unit. The infrared sensor 340 may detect an object based on infrared light, and may detect a location of the detected object, the distance to the detected object, and the speed relative to the detected object.

The infrared sensor 350 may be located at an appropriate position outside the vehicle 100 in order to sense an object located in front of the vehicle 100, an object located to the rear of the vehicle 100, or an object located to the side of the vehicle 100.

The processor 370 may control the overall operation of each unit of the object detection apparatus 300.

The processor 370 may detect and track an object based on acquired images. The processor 370 may calculate the distance to the object and the speed relative to the object, and determine a type, a location, size, shape, color, and route of an object, and content of a detected text.

The processor 370 may detect and track an object based on a reflection electromagnetic wave which is formed as a result of reflection a transmission electromagnetic wave by the object. Based on the electromagnetic wave, the processor 370 may, for example, calculate the distance to the object and the speed relative to the object.

The processor 370 may detect and track an object based on a reflection laser light which is formed as a result of reflection of transmission laser by the object. Based on the laser light, the processor 370 may, for example, calculate the distance to the object and the speed relative to the object.

The processor 370 may detect and track an object based on a reflection ultrasonic wave which is formed as a result of reflection of a transmission ultrasonic wave by the object. Based on the ultrasonic wave, the processor 370 may, for example, calculate the distance to the object and the speed relative to the object.

The processor 370 may detect and track an object based on reflection infrared light which is formed as a result of reflection of transmission infrared light by the object. Based on the infrared light, the processor 370 may, for example, calculate the distance to the object and the speed relative to the object.

The processor 370 may generate object information based on at least one of the following: an image acquired via the camera 310, a reflected electromagnetic wave received via the radar 320, a reflected laser light received via the lidar 330, a reflected ultrasonic wave received via the ultrasonic sensor 340, and a reflected infrared light received via the infrared sensor 350.

The object information may be information on a type, a location, size, shape, color, a route, and a speed of an object in the vicinity of the vehicle 100, and content of a detected text.

For example, the object information may indicate the following: whether there is a lane in the vicinity of the vehicle 100; whether nearby vehicles are travelling at a time when the vehicle 100 is in a stop; whether there is a space available to park in the vicinity of the vehicle 100; a probability that the vehicle 100 collides with an object; a location of any pedestrian or bicycle in the vicinity of the vehicle 100; a type of the roadway on which the vehicle 100 is travelling; the current traffic signal indicated by a traffic light in the vicinity of the vehicle 100; and movement of the vehicle.

The processor 370 may provide the generated object information to the controller 170.

In some implementations, the object detection apparatus 300 may include a plurality of processors 370 or may not include the processor 370. For example, each of the camera 310, the radar 320, the lidar 330, the ultrasonic sensor 340, and the infrared sensor 350 may include its own processor.

The object detection apparatus 300 may operate under control of the controller 170 or a processor inside the vehicle 100.

The communication apparatus 400 is configured to perform communication with an external device. Here, the external device may be a nearby vehicle, a mobile terminal, or a server.

To perform communication, the communication apparatus 400 may include at least one selected from among a transmission antenna, a reception antenna, a Radio Frequency (RF) circuit capable of implementing various communication protocols, and an RF device.

The communication apparatus 400 may include a short-range communication unit 410, a location information unit 420, a V2X communication unit 430, an optical communication unit 440, a broadcast transmission and reception unit 450, and a processor 470.

In some implementations, the communication apparatus 400 may further include other components in addition to the aforementioned components, or may not include some of the aforementioned components.

The short-range communication unit 410 is configured to perform short-range communication. The short-range communication unit 410 may support short-range communication using at least one selected from among Bluetooth™, Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless USB (Wireless Universal Serial Bus).

The short-range communication unit 410 may form wireless area networks to perform short-range communication between the vehicle 100 and at least one external device.

The location information unit 420 is configured to acquire location information of the vehicle 100. For example, the location information unit 420 may include a Global Positioning System (GPS) module or a Differential Global Positioning System (DGPS) module.

The V2X communication unit 430 is configured to perform wireless communication between a vehicle and a server (that is, vehicle to infra (V2I) communication), wireless communication between a vehicle and a nearby vehicle (that is, vehicle to vehicle (V2V) communication), or wireless communication between a vehicle and a pedestrian (that is, vehicle to pedestrian (V2P) communication).

The optical communication unit 440 is configured to perform communication with an external device through the medium of light. The optical communication unit 440 may include a light emitting unit, which converts an electrical signal into an optical signal and transmits the optical signal to the outside, and a light receiving unit which converts a received optical signal into an electrical signal.

In some implementations, the light emitting unit may be integrally formed with a lamp provided included in the vehicle 100.

The broadcast transmission and reception unit 450 is configured to receive a broadcast signal from an external broadcasting management server or transmit a broadcast signal to the broadcasting management server through a broadcasting channel. The broadcasting channel may include a satellite channel, and a terrestrial channel. The broadcast signal may include a TV broadcast signal, a radio broadcast signal, and a data broadcast signal.

The processor 470 may control the overall operation of each unit of the communication apparatus 400.

The processor 470 may generate vehicle driving information based on information which is received from at least one of the short-range communication unit 410, the location information unit 420, the V2X communication unit 430, the optical communication unit 440, and the broadcast transmission and reception unit 450.

For example, the processor 470 may generate vehicle driving information based on information received from a nearby vehicle, the information which is about a location, a model, route, speed, various sensed values, etc. of the nearby vehicle. When information on various sensed values of the nearby vehicle is received, the processor 470 may acquire information on various objects in the vicinity of the vehicle 100, even in a case where the vehicle 100 does not include additional sensors.

For example, the vehicle driving information generated by the processor 470 may indicate the following: a type, location, and movement of an object in the vicinity of the vehicle 100; whether nearby vehicles are travelling at a time when the vehicle 100 is in a stop; whether there is a space available to park in the vicinity of the vehicle 100; a probability that the vehicle 100 collides with an object; a location of any pedestrian or bicycle in the vicinity of the vehicle 100; a type of the roadway on which the vehicle 100 is travelling; the current traffic signal indicated by a traffic light in the vicinity of the vehicle 100; and movement of the vehicle.

In some implementations, the communication apparatus 400 may include a plurality of processors 470, or may not include the processor 470.

In a case where the communication apparatus 400 does not include the processor 470, the communication apparatus 400 may operate under control of the controller 170 or a processor of a device inside of the vehicle 100.

Meanwhile, the communication apparatus 400 may implement a vehicle display device, together with the user interface apparatus 200. In this case, the vehicle display device may be referred to as a telematics device or an Audio Video Navigation (AVN) device.

The communication apparatus 400 may operate under control of the controller 170.

The controller 170 may transmit, through the communication apparatus 400, to a server capable of remotely controlling the vehicle 100, at least one of the following information: driver condition information; vehicle condition information; vehicle driving information; error information indicating an error in the vehicle 100; object information, a user input received via the user interface apparatus 200, and a remote control request signal. Based on information transmitted by the vehicle 100, the server may determine whether the vehicle 100 needs to be remotely controlled.

Through the communication apparatus 400, the controller 170 may receive at least one information item or control signal transmitted by the server. For example, the controller 170 may control the vehicle 100 based on a control signal transmitted by the server.

The driving manipulation apparatus 500 is configured to receive a user input for driving the vehicle 100.

In the manual mode, the vehicle 100 may operate based on a signal provided by the driving manipulation apparatus 500.

The driving manipulation apparatus 500 may include a steering input device 510, an acceleration input device 530, and a brake input device 570.

The steering input device 510 may receive a user input with regard to the direction of travel of the vehicle 100. The steering input device 510 may take the form of a wheel to enable a steering input through the rotation thereof. In some implementations, the steering input device may be provided as a touchscreen, a touch pad, or a button.

The acceleration input device 530 may receive a user input for acceleration of the vehicle 100. The brake input device 570 may receive a user input for deceleration of the vehicle 100. Each of the acceleration input device 530 and the brake input device 570 may take the form of a pedal. In some implementations, the acceleration input device or the break input device may be configured as a touch screen, a touch pad, or a button.

The driving manipulation apparatus 500 may operate under control of the controller 170.

The vehicle drive apparatus 600 is configured to electrically control the operation of various devices of the vehicle 100.

The vehicle drive apparatus 600 may include a power train drive unit 610, a chassis drive unit 620, a door/window drive unit 630, a safety apparatus drive unit 640, a lamp drive unit 650, and an air conditioner drive unit 660.

In some implementations, the vehicle drive apparatus 600 may further include other components in addition to the aforementioned components, or may not include some of the aforementioned components.

Meanwhile, the vehicle drive apparatus 600 may include a processor. Each unit of the vehicle drive apparatus 600 may include its own processor.

The power train drive unit 610 may control the operation of a power train.

The power train drive unit 610 may include a power source drive unit 611 and a transmission drive unit 612.

The power source drive unit 611 may control a power source of the vehicle 100.

In the case in which a fossil fuel-based engine is the power source, the power source drive unit 611 may perform electronic control of the engine. As such the power source drive unit 611 may control, for example, the output torque of the engine. The power source drive unit 611 may adjust the output toque of the engine under control of the controller 170.

In a case where an electric motor is the power source, the power source drive unit 611 may control the motor. The power source drive unit 610 may control, for example, the RPM and toque of the motor under control of the controller 170.

The transmission drive unit 612 may control a transmission.

The transmission drive unit 612 may adjust the state of the transmission. The transmission drive unit 612 may adjust a state of the transmission to a drive (D), reverse (R), neutral (N), or park (P) state.

Meanwhile, in a case where an engine is the power source, the transmission drive unit 612 may adjust a gear-engaged state to the drive position D.

The chassis drive unit 620 may control the operation of a chassis.

The chassis drive unit 620 may include a steering drive unit 621, a brake drive unit 622, and a suspension drive unit 623.

The steering drive unit 621 may perform electronic control of a steering apparatus provided inside the vehicle 100. The steering drive unit 621 may change the direction of travel of the vehicle 100.

The brake drive unit 622 may perform electronic control of a brake apparatus provided inside the vehicle 100. For example, the brake drive unit 622 may reduce the speed of the vehicle 100 by controlling the operation of a brake located at a wheel.

Meanwhile, the brake drive unit 622 may control a plurality of brakes individually. The brake drive unit 622 may apply a different degree-braking force to each wheel.

The suspension drive unit 623 may perform electronic control of a suspension apparatus inside the vehicle 100. For example, when the road surface is uneven, the suspension drive unit 623 may control the suspension apparatus so as to reduce the vibration of the vehicle 100.

Meanwhile, the suspension drive unit 623 may control a plurality of suspensions individually.

The door/window drive unit 630 may perform electronic control of a door apparatus or a window apparatus inside the vehicle 100.

The door/window drive unit 630 may include a door drive unit 631 and a window drive unit 632.

The door drive unit 631 may control the door apparatus. The door drive unit 631 may control opening or closing of a plurality of doors included in the vehicle 100. The door drive unit 631 may control opening or closing of a trunk or a tail gate. The door drive unit 631 may control opening or closing of a sunroof.

The window drive unit 632 may perform electronic control of the window apparatus. The window drive unit 632 may control opening or closing of a plurality of windows included in the vehicle 100.

The safety apparatus drive unit 640 may perform electronic control of various safety apparatuses provided inside the vehicle 100.

The safety apparatus drive unit 640 may include an airbag drive unit 641, a safety belt drive unit 642, and a pedestrian protection equipment drive unit 643.

The airbag drive unit 641 may perform electronic control of an airbag apparatus inside the vehicle 100. For example, upon detection of a dangerous situation, the airbag drive unit 641 may control an airbag to be deployed.

The safety belt drive unit 642 may perform electronic control of a seatbelt apparatus inside the vehicle 100. For example, upon detection of a dangerous situation, the safety belt drive unit 642 may control passengers to be fixed onto seats 110FL, 110FR, 110RL, and 110RR with safety belts.

The pedestrian protection equipment drive unit 643 may perform electronic control of a hood lift and a pedestrian airbag. For example, upon detection of a collision with a pedestrian, the pedestrian protection equipment drive unit 643 may control a hood lift and a pedestrian airbag to be deployed.

The lamp drive unit 650 may perform electronic control of various lamp apparatuses provided inside the vehicle 100.

The air conditioner drive unit 660 may perform electronic control of an air conditioner inside the vehicle 100. For example, when the inner temperature of the vehicle 100 is high, an air conditioner drive unit 660 may operate the air conditioner so as to supply cool air to the inside of the vehicle 100.

The vehicle drive apparatus 600 may include a processor. Each unit of the vehicle dive device 600 may include its own processor.

The vehicle drive apparatus 600 may operate under control of the controller 170.

The operation system 700 is a system for controlling the overall driving operation of the vehicle 100. The operation system 700 may operate in the autonomous driving mode.

The operation system 700 may include the driving system 710, the vehicle pulling-out system 740, and the vehicle parking system 750.

In some implementations, the operation system 700 may further include other components in addition to the aforementioned components, or may not include some of the aforementioned component.

Meanwhile, the operation system 700 may include a processor. Each unit of the operation system 700 may include its own processor.

Meanwhile, in some implementations, in a case where the operation system 700 is implemented as software, the operation system 700 may be a subordinate concept of the controller 170.

Meanwhile, in some implementations, the operation system 700 may be a concept including at least one selected from among the user interface apparatus 200, the object detection apparatus 300, the communication apparatus 400, the vehicle drive apparatus 600, and the controller 170.

The driving system 710 may perform driving of the vehicle 100.

The driving system 710 may perform driving of the vehicle 100 by providing a control signal to the vehicle drive apparatus 600 in response to reception of navigation information from the navigation system 770.

The driving system 710 may perform driving of the vehicle 100 by providing a control signal to the vehicle drive apparatus 600 in response to reception of object information from the object detection apparatus 300.

The driving system 710 may perform driving of the vehicle 100 by providing a control signal to the vehicle drive apparatus 600 in response to reception of a signal from an external device through the communication apparatus 400.

The vehicle pulling-out system 740 may perform an operation of pulling the vehicle 100 out of a parking space.

The vehicle pulling-out system 740 may perform an operation of pulling the vehicle 100 out of a parking space, by providing a control signal to the vehicle drive apparatus 600 in response to reception of navigation information from the navigation system 770.

The vehicle pulling-out system 740 may perform an operation of pulling the vehicle 100 out of a parking space, by providing a control signal to the vehicle drive apparatus 600 in response to reception of object information from the object detection apparatus 300.

The vehicle pulling-out system 740 may perform an operation of pulling the vehicle 100 out of a parking space, by providing a control signal to the vehicle drive apparatus 600 in response to reception of a signal from an external device.

The vehicle parking system 750 may perform an operation of parking the vehicle 100 in a parking space.

The vehicle parking system 750 may perform an operation of parking the vehicle 100 in a parking space, by providing a control signal to the vehicle drive apparatus 600 in response to reception of navigation information from the navigation system 770.

The vehicle parking system 750 may perform an operation of parking the vehicle 100 in a parking space, by providing a control signal to the vehicle drive apparatus 600 in response to reception of object information from the object detection apparatus 300.

The vehicle parking system 750 may perform an operation of parking the vehicle 100 in a parking space, by providing a control signal to the vehicle drive apparatus 600 in response to reception of a signal from an external device.

The navigation system 770 may provide navigation information. The navigation information may include at least one selected from among map information, information on a set destination, information on a route to the set destination, information on various objects along the route, lane information, and information on a current location of the vehicle.

The navigation system 770 may include a memory and a processor. The memory may store navigation information. The processor may control the operation of the navigation system 770.

In some implementations, the navigation system 770 may update pre-stored information by receiving information from an external device through the communication apparatus 400.

In some implementations, the navigation system 770 may be classified as an element of the user interface apparatus 200.

The sensing unit 120 may sense the state of the vehicle. The sensing unit 120 may include an attitude sensor (for example, a yaw sensor, a roll sensor, or a pitch sensor), a collision sensor, a wheel sensor, a speed sensor, a gradient sensor, a weight sensor, a heading sensor, a yaw sensor, a gyro sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, an ultrasonic sensor, an illumination sensor, an accelerator pedal position sensor, and a brake pedal position sensor.

The sensing unit 120 may acquire sensing signals with regard to, for example, vehicle attitude information, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, outside illumination information, information about the pressure applied to an accelerator pedal, and information about the pressure applied to a brake pedal.

The sensing unit 120 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

The interface 130 may serve as a passage for various kinds of external devices that are connected to the vehicle 100. For example, the interface 130 may have a port that is connectable to a mobile terminal and may be connected to the mobile terminal via the port. In this case, the interface 130 may exchange data with the mobile terminal.

Meanwhile, the interface 130 may serve as a passage for the supply of electrical energy to a mobile terminal connected thereto. When the mobile terminal is electrically connected to the interface 130, the interface 130 may provide electrical energy, supplied from the power supply unit 190, to the mobile terminal under control of the controller 170.

The memory 140 is electrically connected to the controller 170. The memory 140 may store basic data for each unit, control data for the operational control of each unit, and input/output data. The memory 140 may be any of various hardware storage devices, such as a ROM, a RAM, an EPROM, a flash drive, and a hard drive. The memory 140 may store various data for the overall operation of the vehicle 100, such as programs for the processing or control of the controller 170.

In some implementations, the memory 140 may be integrally formed with the controller 170, or may be provided as an element of the controller 170.

The controller 170 may control the overall operation of each unit inside the vehicle 100. The controller 170 may be referred to as an Electronic Controller (ECU). The controller 170 may control the vehicle 100 based on information that is acquired by at least one of the object detection apparatus 300 and the communication apparatus 400. Accordingly, the vehicle 100 is capable of autonomously travelling without the presence of a driver.

At least one processor and the controller 170 included in the vehicle 100 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

The power supply unit 190 may supply power required to operate each component under control of the controller 170. In particular, the power supply unit 190 may receive power from, for example, a battery inside the vehicle 100.

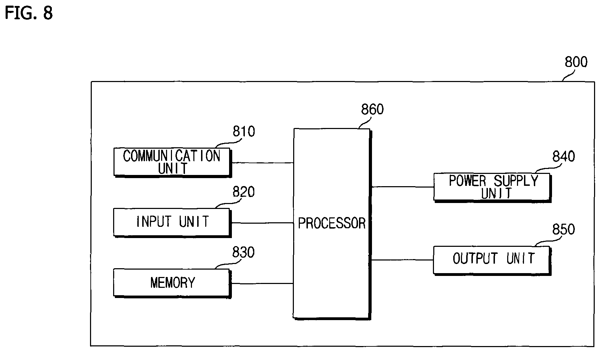

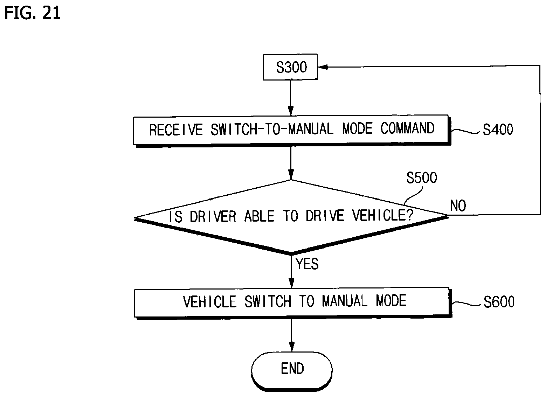

The vehicle 100 may be remotely controlled by an external device. The external device may be a server, a mobile terminal, a nearby vehicle, etc. For example, based on the determination that the vehicle 100 needs to be remotely controlled, the server may remotely control the vehicle 100. Hereinafter, control methods of an autonomous vehicle according to an implementation of the present disclosure, and a server implementing the methods are described in detail with reference to FIGS. 8 and 21.

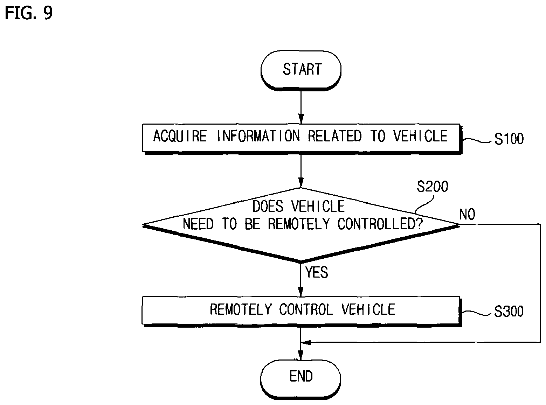

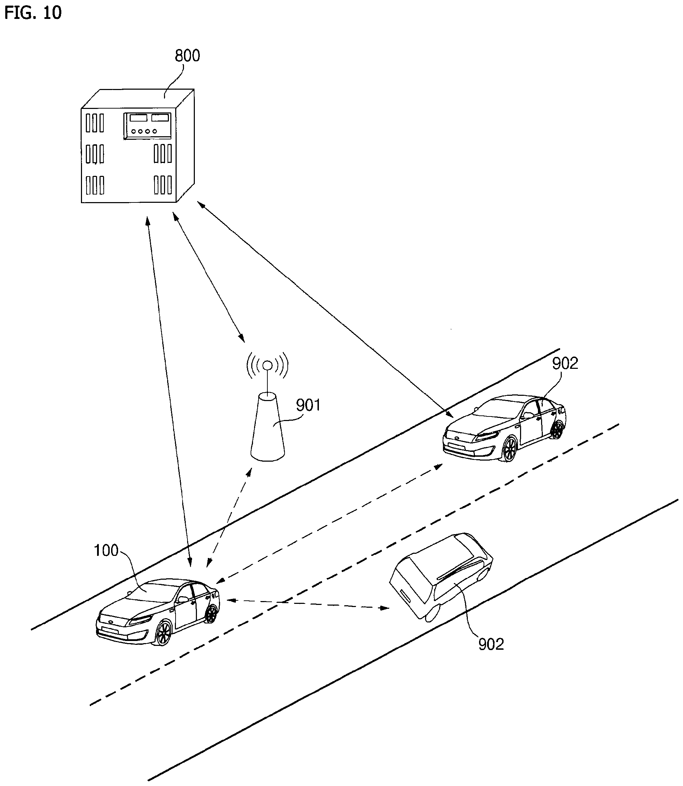

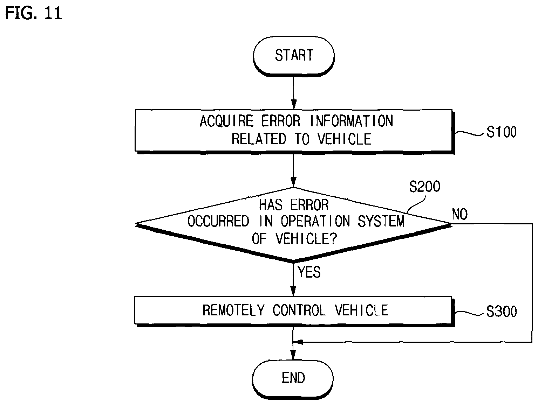

FIG. 8 illustrates a server; FIG. 9 illustrates an example of a control method of an autonomous vehicle; FIG. 10 illustrates communication between a server, an infrastructure, and nearby vehicles for remotely controlling the vehicle; and FIGS. 11 to 21 illustrate examples of control methods of an autonomous vehicle.

Referring to FIG. 8, a server 800 according to an implementation of the present disclosure may include a communication unit 810, an input unit 820, a memory 830, a power supply 840, an output unit 850, and at least one processor such as processor 860.

The communication unit 810 may communication with a vehicle 100 and a nearby object. The vehicle 100 in communication with the communication unit 810 may be a preset vehicle. The communication unit 810 may be a device that performs wireless communication.

The communication unit 810 may be electrically connected to the processor 860 to transfer acquired information to the processor 860. For example, the communication unit 810 may acquire at least one of information transmitted by the vehicle 100 and information transmitted by the nearby object, and transfer the acquired information to the processor 860.

The input unit 820 may receive a user input with regard to the server 800. The input unit 820 may receive at least one of a voice input, a gesture input, a touch input, and a mechanic input. The input unit 820 may be electrically connected to the processor 860 to transfer a signal corresponding to the received user input.

The memory 830 is electrically connected to the processor 860. The memory 830 may store basic data for at least one unit include in the server 800, control data for the operational control of the unit, and data which is input to and output from the server 800.

The memory 830 may store programs for the processing or control of the processor 860. The memory 830 may store a variety of data and programs required for remote control of the vehicle 100.

The memory 830 may be any of various hardware storage devices, such as a ROM, a RAM, an EPROM, a flash drive, and a hard drive.

In some implementations, the memory 860 may be integrally formed with the processor 860, or may be provided as an element of the processor 860.

Under control of the processor 860, the power supply unit 840 may supply power required for operation of each component of the server 800.

The output unit 850 may output at least one of an image, sound, and vibration. The output unit 850 may include a display device, a sound output device, and a vibration output device. The output unit 850 may output various kinds of information under control of the processor 860. For example, by outputting information related to the vehicle 100, the output unit 850 may implement a function of monitoring the vehicle 100.

The processor 860 may be connected to units of the server 800 so as to control the overall operation of the server 800.

The processor 860 may perform various calculation and determination operations. For example, based on information related to the vehicle 100, which is acquired via the communication unit 810, the processor 860 may determine whether the vehicle 100 needs to be remotely controlled. For example, the processor 860 may remotely control the vehicle 100 by transmitting, to the vehicle 100, a remote control signal which is generated based on information related to the vehicle 100.

The processor 860 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

Hereinafter, operations of the processor 860 and a control method of an autonomous vehicle according to an implementation of the present disclosure are described in detail with reference to FIGS. 9 to 21.

Referring to FIG. 9, a control method of an autonomous vehicle according to an implementation of the present disclosure may include: acquiring information related to the vehicle 100 by the server 800 in S100; determining, by the server 800, based on the acquired information, whether the vehicle 100 needs to be remotely controlled in S200; and, in response to a determination that the vehicle 100 needs to be remotely controlled, remotely controlling the vehicle 100 by the server 800 or an nearby object in S300. Hereinafter, each operation is described in more detail.

The processor 860 may acquire information related to the vehicle 100 via the communication unit 810 in S100.

The information related to the vehicle 100 may include at least one of information transmitted by the vehicle and information transmitted by a nearby object.

The information transmitted by the vehicle 100 may include at least one of the following: driver condition information, vehicle condition information, vehicle driving information, error information indicating an error in the vehicle 100, object information, a user input received via the user interface deice 200, and a remote control request signal.

The nearby object may be a nearby vehicle or road infrastructure. The information transmitted by the object may be information on movement of the vehicle 100 sensed by the nearby vehicle or the road infrastructure. For example, a device which is provided in a nearby vehicle or road infrastructure in the vicinity of the vehicle 100 may transmit information on an abnormal movement of the vehicle 100 to the server 800.

The communication unit 810 may acquire information related to the vehicle 100 and transfer the acquired information to the processor 860.

The processor 860 may output the information, transferred from the communication unit 810, via the output unit 850. By outputting the information related to the vehicle 100, the processor 860 may implement a function of monitoring the vehicle 100.

Based on the acquired information, the processor 860 may determine whether the vehicle 100 needs to be remotely controlled in S200.

Specifically, based on the information transferred from the communication unit 810, the processor 860 may determine whether the vehicle 100 needs to be remotely controlled.

For example, based on the determination, based on Information related to the vehicle 100, that an error regarding an autonomous driving function has occurred the vehicle 100 which is in autonomous mode, the processor 860 may determine that the vehicle 100 needs to be remotely controlled. For example, if the vehicle 100 moves in an abnormal manner, the processor 860 may determine that an error regarding an autonomous driving function has occurred in the vehicle 100.

When it is determined that the vehicle 100 needs to be remotely controlled, the processor 860 may remotely control the vehicle 100 in S300. When it is determined that the vehicle 100 needs to be remotely controlled, the processor 860 may request the nearby object to remotely control the vehicle 100.

Based on vehicle condition information and vehicle driving information, which are transmitted by the vehicle 100, the processor 860 may generate a remote control signal to remotely control the vehicle 100. The processor 860 may transmit the remote control signal to the vehicle 100. The vehicle 100 may receive the remote control signal. Upon receiving the remote control signal, the vehicle 100 may enter a remote control mode. Upon entering the remote control mode, the vehicle 100 may be controlled based on a remote control signal transmitted by the server 800.

FIG. 10 is a diagram illustrating communication between a server, an infrastructure, and nearby vehicles for remotely controlling the vehicle.

The vehicle 100 may transmit information related to itself to the server 800. For example, if an error regarding an autonomous driving function has occurred, the vehicle 100 may transmit a signal to the server to inform the occurrence of the error. In this case, the processor 860 may receive information related to the vehicle 100 directly from the vehicle 100.

A nearby vehicle 902 or infrastructure 901 may acquire the information related to the vehicle 100 by sensing the vehicle 100. Alternatively, the nearby vehicle 902 or the infrastructure 901 may acquire information related to the vehicle 100 by receiving the information from the vehicle 100.

The nearby vehicle 902 or the infrastructure 901 may acquire information related to the vehicle 100, and transfer the acquired information to the server 800. For example, based on the determination, based on the acquired information, that an error has occurred in the vehicle 100, the nearby vehicle 902 or the infrastructure 901 may transmit a signal to the server 800 to inform the occurrence of the error.

The processor 860 may request the nearby vehicle 902 or the infrastructure 901 within a predetermined distance from the vehicle 100 to send information related to the vehicle 100. In this case, without making an additional determination as to the vehicle 100, the nearby vehicle 902 or the infrastructure 901 may acquire the information related to the vehicle 100 and transmit the acquired information to the server 800.

Based on the information related to the vehicle 100, the processor 860 may determine whether the vehicle 100 needs to be remotely controlled. For example, based on the determination, based on acquired information, that an error regarding an autonomous driving function has occurred in the vehicle 100 which is currently in autonomous mode, and that a driver is now not able to drive the vehicle 100, the processor 860 may determine that the vehicle 100 needs to be remotely controlled.

If it is determined that the vehicle 100 needs to be remotely controlled, the processor 860 may transmit, to the vehicle 100, a remote control signal which is generated based on vehicle condition information and vehicle driving information, which are transmitted by the vehicle 100. In this case, the vehicle 100 may be controlled based on a remote control signal transmitted by the server 800.

The processor 860 may request the nearby vehicle 902 or the infrastructure 901 to remotely control the vehicle 100. In this case, the processor 860 may acquire information related to the nearby vehicle 902 or the infrastructure 901 to determine whether the nearby vehicle 902 or the infrastructure 100 is able to remotely control the vehicle 100.

The processor 860 may request one of the nearby vehicle 902 or the infrastructure 901, which is able to remotely control the vehicle 100, to remotely control the vehicle. In this case, upon receiving the request, the nearby vehicle 902 or the infrastructure 901 may remotely control the vehicle 100. The nearby vehicle 902 or the infrastructure 902 may acquire information related to the vehicle 100 to generate a remote control signal. The nearby vehicle 902 or the infrastructure 901 may control the vehicle 100 by transmitting the remote control signal to the vehicle 100.

Referring to FIG. 11, information acquired in S100 may be error information indicative of an error in the vehicle 100 which is currently in autonomous mode.

The error information may be information indicating occurrence of an error in at least one device included in the vehicle 100 fin autonomous mode. For example, when an error has occurred regarding an autonomous driving function implemented by the controller 170 or the operation system 700 of the vehicle 100, error information may be generated by the controller 170 or the operation system 700.

For example, when the vehicle 100 is in autonomous mode, the controller 170 or the operation system 700 of the vehicle 100 may detect an error that has occurred while data processing is implemented in the software related to the autonomous driving function. In this case, the controller 170 or the operation system 700 may generate error information including information related to the occurred error. Based on the generation of error information, the controller 170 may transmit the error information to the server 800 via the communication apparatus 400.

In S200, the processor 860 may determine, based on the received error information, whether an error has occurred in the operation system of the vehicle 100. If it is determined that an error has occurred in the operation system of the vehicle 100, the processor 860 may determine that the vehicle 100 needs to be remotely controlled.

If it is determined that the vehicle 100 needs to be remotely controlled, the processor 860 may remotely control the vehicle 100 in S300. Alternatively, based on the determination that the vehicle 100 needs to be remotely controlled, the processor 860 may request a nearby object to remotely control the vehicle 100.

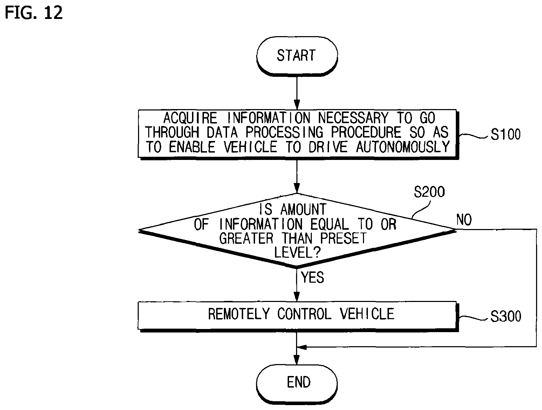

Referring to FIG. 12, information acquired in S100 may be information necessary for driving the vehicle 100 in autonomous mode.

The information necessary to go through a data processing procedure so as to enable the vehicle 100 to drive autonomously may include vehicle condition information and vehicle driving information.

To enable autonomous mode of the vehicle 100, the controller 170 or the operation system 700 may perform data processing on object information provided by the object detection apparatus 300 or information provided by the communication apparatus 400.

If it is determined in S200 that an amount of acquired information is equal to or greater than a preset level, the processor 860 may determine that the vehicle 100 needs to be remotely controlled.

The preset level may be greater than the maximum amount of information that the controller 170 or the operation system 700 is able to process.

If the amount of the information acquired by the sever 800 is equal to or greater than the preset level, it means that the quantity of information necessary to go through a data processing procedure to enable autonomous mode of the vehicle 100 is greater than the maximum amount of information that the controller 170 or the operation system 700 is able to process, and an autonomous driving operation of the vehicle 100 may not be performed properly.

The amount of information that the processor 860 is able to process may be greater than the amount of information that the controller 170 or the operation system 700 is able to process. Accordingly, if the amount of information that the controller 170 needs to process is equal to or greater than the preset level, the processor 860 may control the vehicle 100.

Based on the determination that the vehicle 100 needs to be remotely controlled, the processor 860 may remotely control the vehicle 100 in S300. Alternatively, based on the determination that the vehicle 100 needs to be remotely controlled, the processor 860 may request a nearby object to remotely control the vehicle 100.

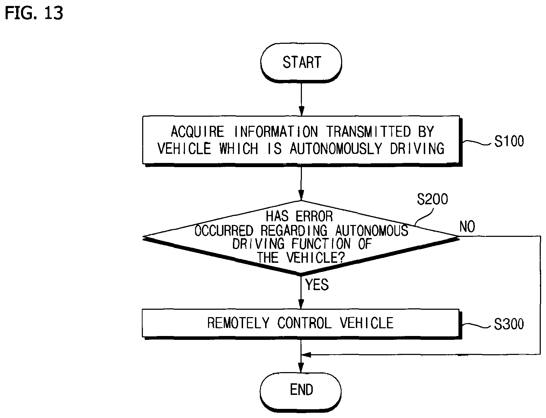

Referring to FIG. 13, information acquired in S100 may be information transmitted by a vehicle 100 which is currently in autonomous mode.

The information transmitted by the autonomously driving vehicle 100 may include driver condition information, vehicle condition information, vehicle driving information, error information indicative of an error in the vehicle 100, object information, a user input received via the user Interface apparatus 200, and a remote control request signal.

In operation S200, the processor 860 may determine, based the acquired information, whether an error has occurred regarding an autonomous driving function of the vehicle 100. Based on the determination that an error has occurred regarding the autonomous driving function of the vehicle 100, the processor 860 may determine that the vehicle 100 needs to be remotely controlled.

For example, even though the autonomously driving vehicle 100 fails to detect an error occurring in the operation system 700, the processor 860 may determine, based on information transmitted by the vehicle 100, whether an error has occurred regarding the autonomous driving function of the vehicle 100.

For example, if the object information transmitted by the vehicle 100 does not correspond to information indicating movement of the vehicle 100, the processor 860 may determine whether an error has occurred in the autonomous function of the vehicle 100.

Based on the determination that the vehicle 100 needs to be remotely controlled, the processor 860 may remotely control the vehicle 100 in S300. In addition, based on the determination that the vehicle 100 needs to be remotely controlled, the processor 860 may request a nearby object to remotely control the vehicle 100.

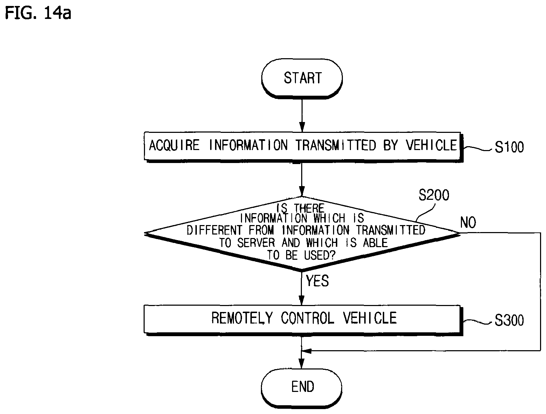

Referring to FIG. 14A, the information acquired in S100 may be information transmitted by the vehicle 100.

Based on the determination in S200 that a discrepancy exists between information related to driving of the vehicle stored on the server 800 and the information transmitted by the vehicle 100, the processor 860 may determine that the vehicle 100 needs to be remotely controlled.

The processor 860 may determine whether a discrepancy exists between information present in the server 800 and the information transmitted by the vehicle 100.

The information present in the server 800 may include information acquired via the communication unit 810 and information stored in the memory 830. The processor 860 may determine whether any one of the information acquired via the communication unit 810 and the information stored in the memory 830 is different from the information transmitted by the vehicle 100.

Then, the processor 860 may determine whether the discrepancy is related to information which may be used for driving of the vehicle 100.

The information which may be used for driving of the vehicle 100 may include infrastructure information related to an expected route of the vehicle 100, construction information, and information on an accident possibly affecting the traffic.

If there is information which is necessary for driving of the vehicle 100 and which is not recognized by the vehicle 100, the processor 860 may determine that the vehicle 100 needs to be remotely controlled.

Based on the determination that the vehicle 100 needs to be remotely controlled, the processor 860 may remotely control the vehicle 100 in S300. Alternatively, based on the determination that the vehicle 100 needs to be remotely controlled, the processor 860 may request a nearby object to remotely control the vehicle 100.

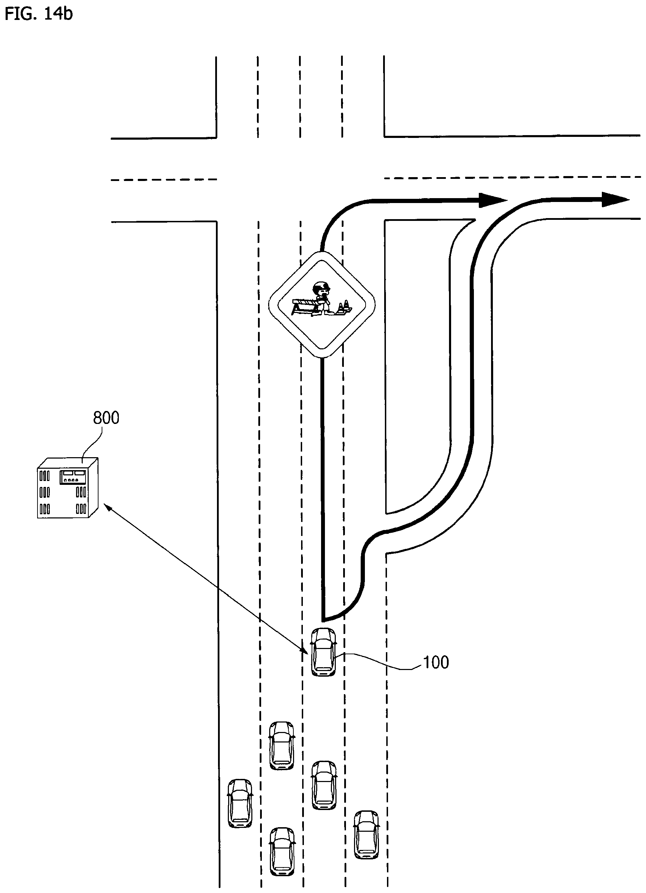

Referring to FIG. 14B, in some situations, an active road work may be present along a planned route of the vehicle 100 and the controller 170 of the vehicle 100 has no relevant information whereas the server 800 has information regarding the roadwork. The information regarding the roadwork may be information that can be used for driving of the vehicle 100.

The information on the active roadwork along the planned route of the vehicle 100 is information related to the vehicle 100. If the controller 170 has the information on the roadwork, the controller 170 may transmit the information on the roadwork to the server 800. However, in this situation, the controller 170 does not have the information regarding the roadwork, so information transmitted by the vehicle 100 does not include the information on the roadwork.

Based on the information transmitted by the vehicle 100 and information present in the server 800, the processor 860 may determine that the vehicle 100 is not aware of the information regarding the roadwork, which is present in the server 800.

Based on the determination that the vehicle 100 is not aware of the information regarding the roadwork that is present in the server 800, the processor 860 may determine that the vehicle 100 needs to be remotely controlled.

Based on the determination that the vehicle 100 needs to be remotely controlled, the processor 860 may transmit a remote control signal to control the vehicle 100. As the roadwork is active along the planned route of the vehicle 100, the processor 860 may control the vehicle 100 to travel along a detour route.

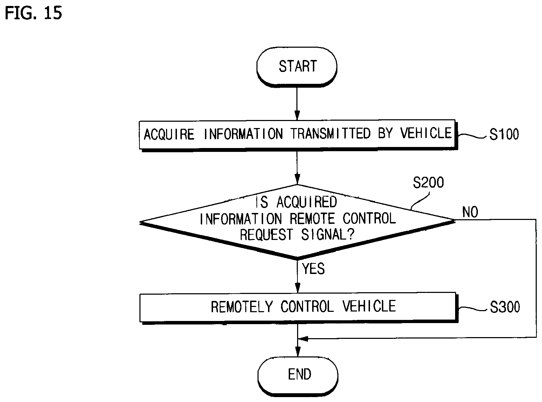

Referring to FIG. 15, information acquired in S100 may be a remote control request signal transmitted by the vehicle 100.

The controller 170 may transmit a remote control request signal to the server 800 in response to a user's remote control request command received via the user interface apparatus 200. For example, based on receiving of a touch input on a remote control request button of the display unit 251, the controller 170 may determine that the remote control request command has been received from the user and generate the remote control request signal. The controller 170 may transmit the generated remote control request signal to the server 800 via the communication apparatus 400.

In addition, based on the determination that an error has occurred regarding the autonomous driving function, the controller may transmit the remote control request signal to the server 800. When the vehicle 100 is in autonomous mode, the controller 170 may determine, based on vehicle condition information and vehicle driving information, whether an error has occurred regarding the autonomous driving function.

Based on the determination in S200 that a remote control request signal has been received, the processor 860 may determine that the vehicle 100 needs to be remotely controlled.

Based on the determination that the vehicle 100 needs to be remotely controlled, the processor 860 may remotely control the vehicle 100 in S300. Alternatively, based on the determination that the vehicle 100 needs to be remotely controlled, the processor 860 may request a nearby object to remotely control the vehicle 100.

The information acquired in S100 may include driver condition information and vehicle condition information, which are transmitted by the vehicle 100.

Based on the determination in S200 that an occupant is not able to drive the vehicle 100 in manual mode, the determination based on the driver condition information and the vehicle condition information, the processor 860 may determine that the vehicle 100 needs to be remotely controlled.

Based on the determination in S200 that an error has occurred regarding an autonomous driving function of the vehicle 100 in autonomous mode, the determination based on the vehicle condition information, the processor 860 may determine that the vehicle 100 needs to be remotely controlled.

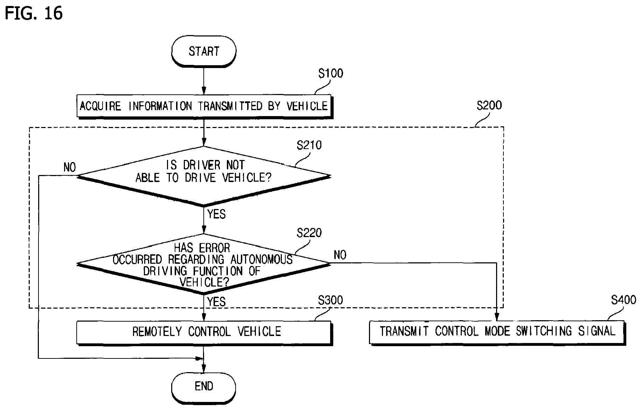

Referring to FIG. 16, based on the determination that an occupant is not able to drive the vehicle 100 and that an error has occurred regarding the autonomous driving function of the vehicle 100, the determination based on driver condition information and vehicle condition information, the processor 860 may determine that the vehicle 100 needs to be remotely controlled.

In S210, the processor 860 may determine, based on the driver condition information, whether an occupant is able to drive the vehicle 100.

For example, if the driver condition information indicates that an occupant in the vehicle 100 is dozing off or unconscious, the processor 860 may determine that the occupant is not able to drive the vehicle 100.

Based on the determination that the occupant is not able to drive the vehicle 100, the processor 860 may determine, in S220, based on the vehicle condition information, whether an error has occurred regarding the autonomous driving function of the vehicle 100.

For example, based on the determination that movement of the vehicle 100 does not correspond to object information, the determination based on the vehicle condition information, the processor 860 may determine that an error has occurred regarding an autonomous driving function of the vehicle 100.

In some implementations, the processor 860 may determine whether an occupant is able to drive the vehicle 100, while at the same time determining whether an error has occurred regarding the autonomous driving function. Based on the determination that the occupant is not able to drive the vehicle 100 and that an error has occurred regarding the autonomous driving function of the vehicle 100, the processor 860 may determine that the vehicle 100 needs to be remotely controlled.

Based on the determination that the vehicle 100 needs to be remotely controlled, the processor 860 may remotely control the vehicle 100 in S300. Alternatively, based on the determination that the vehicle 100 needs to be remotely controlled, the processor 860 may request a nearby object to remotely control the vehicle 100.

Based on the determination that the occupant is not able to drive the vehicle 100 and that the autonomous driving function of the vehicle 100 is properly implemented without an error, the processor 860 may transmit a control mode switching signal to the vehicle 100 in S400 to switch the vehicle into autonomous mode.

A control mode switching signal is a signal for switching a control mode of the vehicle 100. For example, when the vehicle 100 in manual mode receives a control mode switching signal corresponding to autonomous mode, the vehicle 100 may switch to autonomous mode.

Based on the determination that the autonomous driving function of the vehicle 100 is properly implemented without an error, the processor 860 may transmit a control mode switching signal corresponding to autonomous mode, so that the vehicle 100 may be switch to autonomous mode.

In response to the received control mode switching signal, the controller 170 may switch the control mode of the vehicle 100 to autonomous mode.

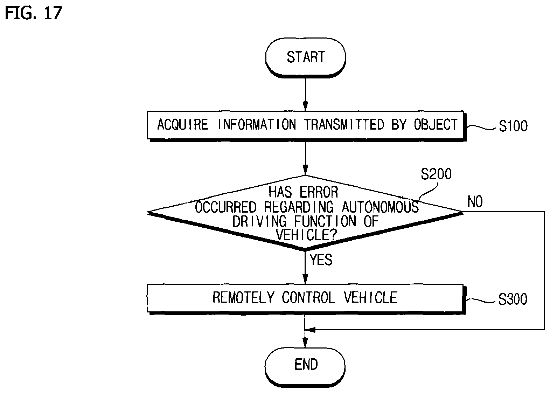

Referring to FIG. 17, information acquired in S100 may be information transmitted by a nearby object.

The nearby object may be a nearby vehicle or an infrastructure which is able to sense the vehicle 100. The nearby vehicle or the infrastructure may acquire information related to the vehicle 100.

For example, a nearby vehicle or an infrastructure within a predetermined distance from the vehicle 100 may sense a location of the vehicle 100 through an additional sensing device. In addition, the nearby vehicle or the infrastructure may determine a driving condition of the vehicle 100.

Based on the acquired information related to the vehicle 100, the nearby vehicle or the infrastructure may determine whether an error has occurred regarding the autonomous driving function of the vehicle 100.

The nearby vehicle or the infrastructure may transmit information related to the vehicle 100 to the server 800. For example, based on the determination that an error has occurred regarding the autonomous driving function of the vehicle 100, the nearby vehicle or the infrastructure may transmit, to the server 800, information notifying the occurrence of the error.

Based on the determination in S200 that an error has occurred regarding the autonomous driving function of the vehicle 100, the determination based on information transmitted by an object, the processor 860 may determine that the vehicle 100 needs to be remotely controlled.

For example, if the information transmitted by the object is information notifying occurrence of an error regarding the autonomous driving function of the vehicle 100, the processor 860 may determine that the error has occurred regarding the autonomous driving function of the vehicle 100.

For example, based on the information transmitted by the object, the processor 860 may determine a control state and movement of the vehicle 100. Based on the control state and the movement of the vehicle 100, the processor 860 may determine whether an error has occurred regarding the autonomous driving function of the vehicle 100.

Based on the determination that an error has occurred regarding the autonomous driving function of the vehicle 100, the processor 860 may determine that the vehicle 100 needs to be remotely controlled.

Based on the determination that the vehicle 100 needs to be remotely controlled, the processor 860 may remotely control the vehicle 100 in S300. Alternatively, based on the determination that the vehicle 100 needs to be remotely controlled, the processor 860 may request a nearby object to remotely control the vehicle 100.

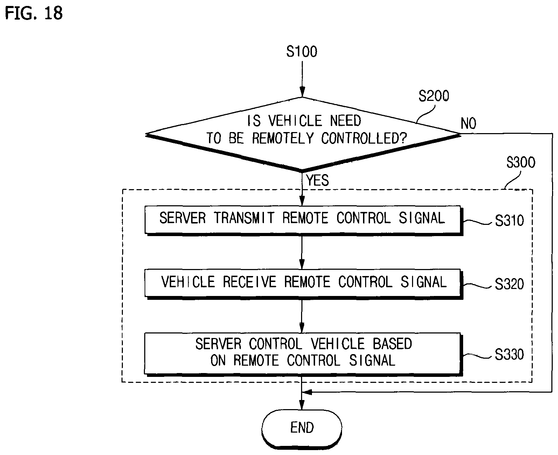

Referring to FIG. 18, based on the determination in S200 that the vehicle 100 needs to be remotely controlled, the processor 860 may control the vehicle 100 with a remote control signal.

Based on vehicle condition information and vehicle driving information transmitted by the vehicle 100, the processor 860 may generate a remote control signal to remotely control the vehicle 100.

The processor 860 may transmit the remote control signal to the vehicle 100 in S310.

The vehicle 100 may receive the remote control signal in S320. When the remote control signal is received, the controller 170, may control the vehicle 100 to enter remote control mode.

In operation S330, when the vehicle 100 is in remote control mode, the controller 170 may control the vehicle based on the remote control signal transmitted by the server 800.

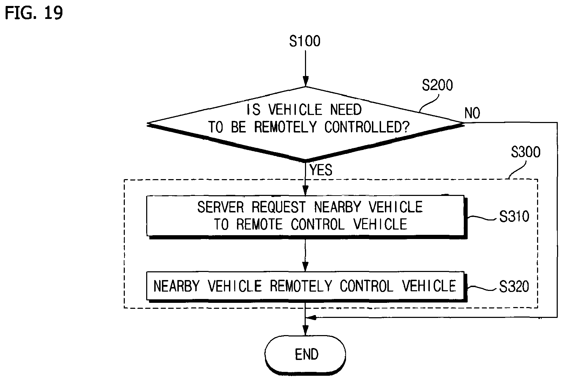

Referring to FIG. 19, operation S300 of remotely controlling the vehicle 100 may include operation S310 and operation S320. In S310, the server 800 requests a nearby vehicle or infrastructure, which is able to remotely control the vehicle 100, to remotely control the vehicle 100. In operation S320, the nearby vehicle or infrastructure remotely controls the vehicle 100.

If the vehicle 100 needs to be remotely controlled, the processor 860 may request a nearby object to remotely control the vehicle 100.

The nearby object may be a nearby vehicle or an infrastructure which is able to remotely control the vehicle 100.

The processor 860 may determine whether there is a nearby vehicle or infrastructure which is able to remotely control the vehicle 100. For example, the processor 860 may search for a nearby vehicle or infrastructure within a predetermined distance from the vehicle 100. By receiving information from nearby vehicle or infrastructure that may have been found, the processor 860 may determine whether the nearby vehicle or infrastructure has a capability to remotely control the vehicle 100.

Before operation S310 in which remote controlling of the vehicle 100 is requested, the processor 860 may determine which one among the server 800, the nearby vehicle, and the infrastructure has the highest communication quality with the vehicle 100. To this end, the processor 860 may receive information on communication quality with the vehicle 100 from the nearby vehicle and the infrastructure.

Based on the determination that the server 800 has the highest communication quality with the vehicle 100, the processor 860 may remotely control the vehicle 100. In this case, the processor 860 may generate a remote control signal for remote controlling the vehicle 100, and transmit the generated remote control signal to the vehicle 100.

If any one of the nearby vehicle and the infrastructure is determined to have the highest communication quality with the vehicle 100, the processor 860 may request the determined one to remotely control the vehicle 100.

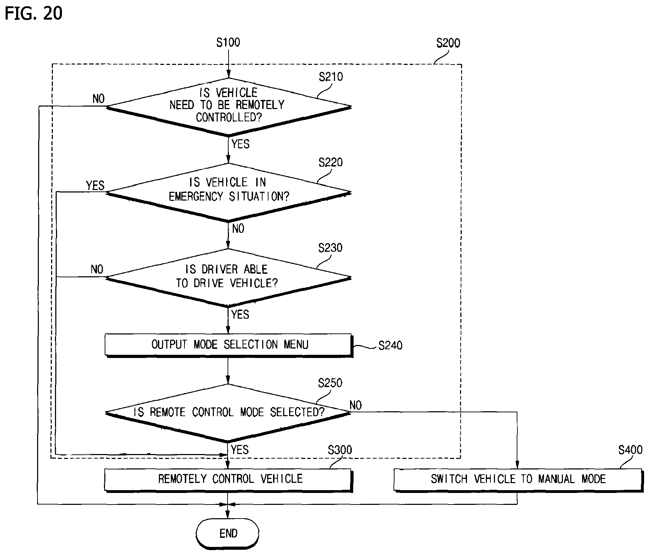

Referring to FIG. 20, based on the determination in S210 that the vehicle 100 needs to be remotely controlled, the processor 860 may determine whether the vehicle 100 is now in an emergency situation in S220.

Based on information related to the vehicle 100, the processor 860 may determine whether the vehicle 100 is now in an emergency situation. The emergency situation may be a situation in which remotely controlling the vehicle 100 is required.

For example, when collision with an object is likely to occur if the vehicle 100 is not remotely controlled, it may be an emergency situation. For example, when collision with an object is unlikely to happen in absence of remote control of the vehicle 100, it may not be an emergency situation. For example, when the vehicle is likely to collide with a specific object, it may be an emergency situation. For example, when a driver of the vehicle 100 is unconscious, it may be an emergency situation. For example, when the vehicle 100 is stopped on a shoulder of the road, it may not be an emergency situation.

Based on the determination that the vehicle 100 is in an emergency situation, the processor 860 may remotely control the vehicle 100. Alternatively, based on the determination that the vehicle 100 needs to be remotely controlled, the processor 860 may request a nearby object to remotely control the vehicle 100.

Based on the determination that the vehicle 100 is not in an emergency situation, the processor 860 may determine whether an occupant is able to drive the vehicle 100 in S230.

Based on driver condition information transmitted by the vehicle 100, the processor 860 may determine whether an occupant is able to drive the vehicle 100.

Based on the determination that the occupant is unable to drive the vehicle 100, the processor 860 may remotely control the vehicle 100 in S300.

Based on the determination that the occupant is able to drive the vehicle 100, the processor 860 may instruct the vehicle 100 to output a driving mode selection menu to the output unit 250 of the vehicle 100.

The processor 860 may transmit, to the vehicle 100, a control signal corresponding to the outputting of the driving mode selection menu. In response to the control signal transmitted by the processor 860, the controller 170 may instruct the output unit 250 to output the control selection menu in S240.

The driving mode selection menu may be an image that is output to the output unit 250 of the vehicle 100. The driving mode selection menu may include a button corresponding to remote control mode of the vehicle 100, and a button corresponding to manual mode of the vehicle 100.

In S250, the controller 170 may determine whether the button corresponding to remote control mode is selected from the driving mode selection menu.

When a touch input on the button corresponding to the remote control mode of the vehicle 100 is received via the user interface apparatus 200, the controller 180 may determine that remote control mode is selected.

When a touch input on the button corresponding to manual mode of the vehicle 100 is received via the user interface apparatus 200, the controller 170 may determine that manual mode is selected.

When manual mode is selected from a driving mode selection menu, the controller 170 may switch the vehicle 100 to manual mode in S400.

When remote control mode is selected from the driving mode selection menu, the processor 860 may remotely control the vehicle in S300.

When remote control mode is selected from the control selection menu, the controller 170 may transmit, to the server 800, a signal notifying the selection of remote control mode. When the signal notifying the selection of remote control mode is received, the processor 860 transmits a remote control signal to control the vehicle 100.

Referring to FIG. 21, if the vehicle 100 receives a switch-to-manual mode command while being remotely controlled, the controller 170 may switch the vehicle 100 to manual mode.

While the vehicle 100 is being remotely controlled in S300, the controller 170 may receive a switch-to-manual mode command via the user interface apparatus 200.

When the switch-to-manual mode command is received, the controller 170 or the processor 860 may determine whether an occupant is able to drive the vehicle 100 in S500.

The controller 170 may transmit a signal to the server 800 to notify the reception of the switch-to-manual mode command. In response to receiving the signal notifying the reception of the switch-to-manual mode command, the processor 860 may determine whether an occupant is able to drive the vehicle 100.

Based on driver condition information, the controller 170 or the processor 860 may determine whether the occupant is able to drive the vehicle 100.

Based on the determination that the occupant is unable to drive the vehicle 100, the processor 860 may maintain remote control of the vehicle 100 in S300.

Based on the determination that the occupant is able to drive the vehicle 100, the controller 170 may control the vehicle 100 to switch to manual mode in S600.

In situations where the processor 860 is responsible for determining whether an occupant is able to drive the vehicle 100, the processor 860 may inform the controller 170 of a result of the determination. In this case, the controller 170 may switch or maintain driving mode of the vehicle 100 based on the determination of the processor 860.

The control method of an autonomous vehicle according to an implementation of the present disclosure may further include, an operation for determining whether the server 800 is able to remotely control the vehicle 100, and an operation for performing an emergency maneuver of the vehicle 100, the two operations which are performed before operation S300 of remotely controlling the vehicle 100.

For example, the processor 860 or the controller 170 may determine whether the server 800 is able to remotely control the vehicle 100.

For example, when an error has occurred in at least one of the object detection apparatus 300, the communication apparatus 400, the vehicle drive apparatus 600, the navigation system 770, or the sensing unit 120 of the vehicle 100, the processor 860 or the controller 170 may determine that the server 800 is unable to remotely control the vehicle 100.

Based on the determination that the server 800 is unable to remotely control the vehicle 100, the processor 860 or the controller 170 may control the vehicle 100 to perform an emergency maneuver.

The emergency maneuver indicates a case where the vehicle 100 moves to and stops at a location where a probability for the vehicle 100 to collide with something is relatively low.

Based on information on environment surrounding the vehicle 100, the processor 860 or the controller 170 may search for a location where a probability for the vehicle 100 to collide with something is relatively low. For example, the relative probability of the vehicle coming in collision can be determined with respect to the probability of the vehicle coming in collision at the current position of the vehicle. The processor 860 or the controller 170 may control the vehicle 100 to move to and stop at the location where a probability for the vehicle 100 to collide with something is relatively low.

When the vehicle 100 performs an emergency maneuver, the processor 860 or the controller 170 may notify a nearby vehicle within a predetermined distance from the vehicle 100 of the emergency maneuver, or may request the nearby vehicle to perform a cooperative control to avoid collision.

Through communication with the nearby vehicle, the processor 860 or the controller 170 may notify the emergency maneuver of the vehicle 100 and the location of the emergency maneuver. The controller 170 may display, on a display device provided outside the vehicle 100, the information indicating that the vehicle 100 is in the emergency maneuver.

Examples of the cooperative control may include controlling the movement of the nearby vehicle to allow the vehicle 100 to perform an emergency maneuver quickly, rapidly, and safely. For example, when the vehicle 100 driving in the first lane wants to perform an emergency maneuver at a road shoulder, a nearby vehicle may perform cooperative control by stopping or quickly moving to make way for the vehicle 100.

The present disclosure as described above may be implemented as code that can be written on a computer-readable medium in which a program is recorded and thus read by a computer. The computer-readable medium includes all kinds of recording devices in which data is stored in a computer-readable manner. Examples of the computer-readable recording medium may include a hard disk drive (HDD), a solid state disk (SSD), a silicon disk drive (SDD), a read only memory (ROM), a random access memory (RAM), a compact disk read only memory (CD-ROM), a magnetic tape, a floppy disc, and an optical data storage device. In addition, the computer-readable medium may be implemented as a carrier wave (e.g., data transmission over the Internet). In addition, the computer may include a processor or a controller.

## Claims

1. A control method for an autonomous vehicle (100) comprising:
acquiring, by a server (800), information related to the vehicle (100);
determining, by the server (800) and based on the acquired information, that the vehicle (100) needs to be remotely controlled; and
based on the determination that the vehicle (100) needs to be remotely controlled, remotely controlling the autonomous vehicle by the server (800) or a nearby object, such as a nearby vehicle (902) or a road infrastructure (901),
wherein the acquiring of the information related to the vehicle (100) comprises acquiring, by the server (800), at least one of information transmitted by the vehicle (100) or information transmitted by the nearby object;
wherein the vehicle (100) is in autonomous mode,
wherein the acquired information is error information indicating that an error has occurred in the vehicle (100), and
wherein the determining comprises:
when the error information is received, determining that an error associated with an operation system of the vehicle (100) or an error associated with an autonomous driving function of the vehicle (100) has occurred based on the error information; and
based on the determination that an error associated with the operation system of the vehicle (100) has occurred, determining, by the server (800), that the vehicle (100) needs to be remotely controlled.

2. The control method of claim 1,
wherein the acquired information is information necessary for driving the vehicle (100) in autonomous mode, and
wherein the determining comprises:
determining that an amount of the acquired information is equal to or greater than a preset level; and
based on the determination that the amount of the acquired information is equal to or greater than the preset level, determining, by the server (800), that the vehicle (100) needs to be remotely controlled.

3. The control method of any one of claims 1 to 2,
wherein the acquired information is the information transmitted by the vehicle (100), and
wherein the determining comprises:
determining that a discrepancy exists between information related to driving of the vehicle (100) stored on the server (800) and the information transmitted by the vehicle (100); and
based on the determination that a discrepancy exists between information related to driving of the vehicle (100) stored on the server (800) and the information transmitted by the vehicle (100), determining, by the server (800), that the vehicle (100) needs to be remotely controlled.

4. The control method of any one of claims 1 to 3,
wherein the acquired information transmitted by the vehicle (100) comprises driver condition information and vehicle condition information, and
wherein the determining comprises:
determining, based on the driver condition information, that an occupant of the vehicle (100) is unable to drive the vehicle (100) in manual mode; and
based on the determination that an occupant of the vehicle (100) is unable to drive the vehicle (100) in manual mode, determining that the vehicle (100) needs to be remotely controlled;
and/or
determining, based on the vehicle condition information, that an error has occurred regarding an autonomous driving function of the vehicle (100) in autonomous mode; and
based on the determination that the error has occurred regarding an autonomous driving function of the vehicle (100) in autonomous mode, determining that that the vehicle (100) needs to be remotely controlled.

5. The control method of any one of claims 1 to 4,
wherein the acquired information is information transmitted by the nearby object, and
wherein the determining comprises:
determining that an error associated with an autonomous driving function of the vehicle (100) has occurred based on the information transmitted by the nearby object; and
based on the determination that an error associated with an autonomous driving function of the vehicle (100) has occurred, determining, by the server (800), that the vehicle (100) needs to be remotely controlled.

6. The control method of claim 1, wherein the nearby object comprises a nearby vehicle (902) or an infrastructure (901) within a predetermined distance from the vehicle (100), and wherein the remotely controlling comprises:
determining, by the server (800), that the nearby vehicle (902) or the infrastructure (901) has a capability to remotely control the vehicle (100);
based on the determination that the nearby vehicle (902) or the infrastructure (901) has a capability to remotely control the vehicle (100), requesting, by the server (800), the nearby vehicle (902) or the infrastructure (901) to remotely control the vehicle (100); and
remotely controlling the vehicle (100) by the nearby vehicle (902) or the infrastructure (901).

7. The control method of claim 6, comprising:
before the requesting, determining which one among the server (800), the nearby vehicle (902), and the infrastructure (901) has the highest communication quality with the vehicle (100);
based on a determination that the server (800) has the highest communication quality with the vehicle (100), remotely controlling the vehicle (100) by the server (800); and
based on a determination that the nearby vehicle (902) or the infrastructure (901) has the highest communication quality with the vehicle (100), requesting, by the server (800), the nearby vehicle (902) or the infrastructure (901) to remotely control the vehicle (100).

8. The control method of claim 1, wherein the vehicle (100) needs to be remotely controlled, and wherein the control method comprises:
before the remotely controlling, determining, by the server (800), that an occupant of the vehicle (100) is able to drive the vehicle (100);
based on a determination that the occupant is able to drive the vehicle (100), controlling, by the server (800), the vehicle (100) to instruct an output unit of the vehicle (100) to output a driving mode selection menu;
determining whether manual mode or remote control mode is selected by the occupant from the output driving mode selection menu;
based on a determination that manual mode is selected from the driving mode selection menu, switching the vehicle (100) to manual mode; and
based on a determination that remote control mode is selected from the driving mode selection menu, remotely controlling the vehicle (100) by the server (800).

9. The control method of claim 8, comprising:
before the determining whether an occupant is able to drive the vehicle (100), determining, by the server (800), whether the vehicle (100) is in an emergency situation;
based on a determination that the vehicle (100) is in an emergency situation, remotely controlling the vehicle (100) by the server (800); and
based on a determination that the vehicle (100) is not in an emergency situation, determining whether the occupant is able to drive the vehicle (100).

10. The control method of claim 1, further comprising:
receiving a switch-to-manual command; and
determining whether an occupant of the vehicle (100) is able to drive the vehicle (100);
based on a determination that the occupant is unable to drive the vehicle (100), maintaining remote control of the vehicle (100) by the server (800); and
based on a determination that the occupant is able to drive the vehicle (100), switching the vehicle (100) from remote control mode to manual mode.

11. The control method of claim 1, comprising:
before the remotely controlling, determining that the server (800) is unable to remotely control the vehicle (100);
based on the determination that the server (800) is unable to remotely control the vehicle (100), performing an emergency maneuver by the vehicle (100), and
during the performing of the emergency maneuver by the vehicle (100), performing at least one of:
transmitting, by the vehicle (100) or the server (800), information related to the emergency maneuver to a nearby vehicle (902) within a predetermined distance from the vehicle (100); or
requesting, by the vehicle (100) or the server (800), the nearby vehicle (902) to perform a cooperative control.

12. An apparatus configured to perform a control method according to any one of claims 1 to 11.

## Patentansprüche

1. Steuerungsverfahren für ein autonomes Fahrzeug (100), umfassend:
Erlangen, mittels eines Servers (800), von das Fahrzeug (100) betreffender Information,
Feststellen, mittels des Servers (800) und basierend auf der erlangten Information, dass das Fahrzeug (100) ferngesteuert werden muss, und
basierend auf der Feststellung, dass das Fahrzeug (100) ferngesteuert werden muss, Fernsteuern des autonomen Fahrzeugs durch den Server (800) oder ein benachbartes Objekt, wie zum Beispiel ein benachbartes Fahrzeug (902) oder eine Straßeninfrastruktur (901),
wobei das Erlangen der das Fahrzeug (100) betreffenden Information ein Erlangen, durch den Server (800), einer von dem Fahrzeug (100) gesendeten Information und/oder einer von dem benachbarten Objekt gesendeten Information umfasst,
wobei das Fahrzeug (100) sich in einem autonomen Modus befindet,
wobei die erlangte Information eine Fehlerinformation ist, welche angibt, dass in dem Fahrzeug (100) ein Fehler aufgetreten ist, und
wobei das Feststellen umfasst:
Ermitteln, wenn die Fehlerinformation empfangen wird, dass basierend auf der Fehlerinformation ein einem Betriebssystem des Fahrzeugs (100) zugehöriger Fehler oder ein einer autonomen Fahrfunktion des Fahrzeugs (100) zugehöriger Fehler aufgetreten ist, und
basierend auf der Ermittlung, dass ein dem Betriebssystem des Fahrzeugs (100) zugehöriger Fehler aufgetreten ist, Feststellen, durch den Server (800), dass das Fahrzeug (100) ferngesteuert werden muss.

2. Steuerungsverfahren nach Anspruch 1,
wobei die erlangte Information Information ist, welche zum Fahren des Fahrzeugs (100) in einem autonomen Modus notwendig ist, und
wobei das Feststellen umfasst:
Bestimmen, dass ein Maß der erlangten Information gleich oder größer als eine vorbestimmte Stufe ist, und
basierend auf der Bestimmung, dass das Maß der erlangten Information gleich oder größer als die vorbestimmte Stufe ist, Feststellen, durch den Server (800), dass das Fahrzeug (100) ferngesteuert werden muss.

3. Steuerungsverfahren nach einem der Ansprüche 1 bis 2,
wobei die erlangte Information die Information ist, die vom Fahrzeug (100) gesendet wird, und
wobei das Feststellen umfasst:
Ermitteln, dass eine Diskrepanz zwischen auf dem Server (800) gespeicherter, ein Fahren des Fahrzeugs (100) betreffender Information und der von dem Fahrzeug (100) gesendeten Information besteht, und
basierend auf der Ermittlung, dass eine Diskrepanz zwischen auf dem Server (800) gespeicherter, ein Fahren des Fahrzeugs (100) betreffender Information und der von dem Fahrzeug (100) gesendeten Information besteht, Feststellen, durch den Server (800), dass das Fahrzeug (100) ferngesteuert werden muss.

4. Steuerungsverfahren nach einem der Ansprüche 1 bis 3,
wobei die erlangte, vom Fahrzeug (100) gesendete Information Fahrerzustandsinformation und Fahrzeugzustandsinformation umfasst, und
wobei das Feststellen umfasst:
Bestimmen, basierend auf der Fahrerzustandsinformation, dass ein Insasse des Fahrzeugs (100) unfähig zum Fahren des Fahrzeugs (100) in einem manuellen Modus ist, und
basierend auf der Bestimmung, dass ein Insasse des Fahrzeugs (100) unfähig ist, das Fahrzeug (100) in einem manuellen Modus zu fahren, Feststellen, dass das Fahrzeug (100) ferngesteuert werden muss,
und/oder
Bestimmen, basierend auf der Fahrzeugzustandsinformation, dass ein eine autonome Fahrfunktion des Fahrzeugs (100) betreffender Fehler in einem autonomen Modus aufgetreten ist, und
basierend auf der Bestimmung, dass der eine autonome Fahrzeugfunktion des Fahrzeugs (100) betreffende Fehler in einem autonomen Modus aufgetreten ist, Feststellen, dass das Fahrzeug (100) ferngesteuert werden muss.

5. Steuerungsverfahren nach einem der Ansprüche 1 bis 4,
wobei die erlangte Information von dem benachbarten Objekt gesendete Information ist, und
wobei das Feststellen umfasst:
Bestimmen, dass ein einer autonomen Fahrfunktion des Fahrzeugs (100) zugehöriger Fehler basierend auf der von dem benachbarten Objekt gesendeten Information aufgetreten ist, und
basierend auf der Bestimmung, dass ein einer autonomen Fahrfunktion des Fahrzeugs (100) zugehöriger Fehler aufgetreten ist, Feststellen, durch den Server (800), dass das Fahrzeug (100) ferngesteuert werden muss.

6. Steuerungsverfahren nach Anspruch 1, wobei das benachbarte Objekt ein benachbartes Fahrzeug (902) oder eine Infrastruktur (901) innerhalb eines vorbestimmten Abstands von dem Fahrzeug (100) umfasst, und wobei das Fernsteuern umfasst:
Feststellen, durch den Server (800), dass das benachbarte Fahrzeug (902) oder die Infrastruktur (901) eine Fähigkeit zum Fernsteuern des Fahrzeugs (100) hat,
basierend auf der Feststellung, dass das benachbarte Fahrzeug (902) oder die Infrastruktur (901) eine Fähigkeit zum Fernsteuern des Fahrzeugs (100) hat, Auffordern, durch den Server (800), des benachbarten Fahrzeugs (902) oder der Infrastruktur (901) zum Fernsteuern des Fahrzeugs (100), und
Fernsteuern des Fahrzeugs (100) durch das benachbarte Fahrzeug (902) oder die Infrastruktur (901).

7. Steuerungsverfahren nach Anspruch 6, umfassend:
vor dem Auffordern, Ermitteln, welches unter dem Server (800), dem benachbarten Fahrzeug (902) und der Infrastruktur (901) die höchste Kommunikationsqualität mit dem Fahrzeug (100) hat,
basierend auf einer Ermittlung, dass der Server (800) die höchste Kommunikationsqualität mit dem Fahrzeug (100) hat, Fernsteuern des Fahrzeugs (100) durch den Server (800), und
basierend auf einer Ermittlung, dass das benachbarte Fahrzeug (902) oder die Infrastruktur (901) die höchste Kommunikationsqualität mit dem Fahrzeug (100) hat, Auffordern, durch den Server (800), des benachbarten Fahrzeugs (902) oder der Infrastruktur (901) zum Fernsteuern des Fahrzeugs (100).

8. Steuerungsverfahren nach Anspruch 1, wobei das Fahrzeug (100) ferngesteuert werden muss, und wobei das Steuerungsverfahren umfasst:
vor dem Fernsteuern, Ermitteln durch den Server (800), dass ein Insasse des Fahrzeugs (100) zum Fahren des Fahrzeugs (100) fähig ist,
basierend auf einer Ermittlung, dass der Insasse zum Fahren des Fahrzeugs (100) fähig ist, Steuern des Fahrzeugs (100) durch den Server (800) dazu, eine Ausgabeeinheit des Fahrzeugs (100) zum Ausgeben eines Fahrmodusauswahlmenüs anzuweisen,
Ermitteln, ob ein manueller Modus oder ein Fernsteuermodus durch den Insassen aus dem ausgegebenen Fahrmodusauswahlmenü ausgewählt worden ist,
basierend auf einer Ermittlung, dass ein manueller Modus aus dem Fahrmodusauswahlmenü ausgewählt ist, Umschalten des Fahrzeugs (100) in einen manuellen Modus, und
basierend auf einer Ermittlung, dass ein Fernsteuermodus aus dem Fahrmodusauswahlmenü ausgewählt ist, Fernsteuern des Fahrzeugs (100) durch den Server (800).

9. Steuerungsverfahren nach Anspruch 8, umfassend:
vor dem Ermitteln, ob ein Insasse zum Fahren des Fahrzeugs (100) fähig ist, Ermitteln, durch den Server (800), ob das Fahrzeug (100) sich in einer Notsituation befindet,
basierend auf einer Ermittlung, dass sich das Fahrzeug (100) in einer Notsituation befindet, Fernsteuern des Fahrzeugs (100) durch den Server (800), und
basierend auf einer Ermittlung, dass sich das Fahrzeug (100) nicht in einer Notsituation befindet, Ermitteln, ob der Insasse zum Fahren des Fahrzeugs (100) fähig ist.

10. Steuerungsverfahren nach Anspruch 1, ferner umfassend:
Empfangen eines Befehls zum Umschalten auf manuell, und
Ermitteln, ob ein Insasse des Fahrzeugs (100) zum Fahren des Fahrzeugs (100) fähig ist,
basierend auf einer Ermittlung, dass der Insasse zum Fahren des Fahrzeugs (100) unfähig ist, Beibehalten einer Fernsteuerung des Fahrzeugs (100) durch den Server (800), und
basierend auf einer Ermittlung, dass der Insasse zum Fahren des Fahrzeugs (100) fähig ist, Umschalten des Fahrzeugs (100) vom Fernsteuermodus in einen manuellen Modus.

11. Steuerungsverfahren nach Anspruch 1, umfassend:
vor dem Fernsteuern, Bestimmen, dass der Server (800) zum Fernsteuern des Fahrzeugs (100) unfähig ist,
basierend auf der Bestimmung, dass der Server (800) zum Fernsteuern des Fahrzeugs (100) unfähig ist, Ausführen eines Notfallmanövers durch das Fahrzeug (100), und
während des Ausführens des Notfallmanövers durch das Fahrzeug (100), Ausführen zumindest eines aus:
Senden, durch das Fahrzeug (100) oder den Server (800), von das Notfallmanöver betreffender Information an ein benachbartes Fahrzeug (902) innerhalb eines vorbestimmten Abstands von dem Fahrzeug (100), oder
Auffordern, durch das Fahrzeug (100) oder den Server (800), des benachbarten Fahrzeugs (902) zum Ausführen einer gemeinsamen Steuerung.

12. Vorrichtung, die zum Ausführen eines Steuerungsverfahrens nach einem der Ansprüche 1 bis 11 eingerichtet ist.

## Revendications

1. Procédé de commande pour un véhicule autonome (100) consistant à:
acquérir, par un serveur (800), des informations concernant le véhicule (100);
déterminer, par le serveur (800) et sur la base des informations acquises, que le véhicule (100) nécessite d'être commandé à distance; et
sur la détermination que le véhicule (100) nécessite d'être commandé à distance, commander à distance le véhicule autonome par le serveur (800) ou un objet à proximité, tel qu'un dispositif (902) à proximité ou une infrastructure routière (901),
l'acquisition des informations concernant le véhicule (100) consistant à acquérir, par le serveur (800), les informations transmises par le véhicule (100) et/ou les informations transmises par l'objet à proximité;
le véhicule (100) étant en mode autonome,
les informations acquises étant des informations d'erreur indiquant qu'une erreur s'est produite dans le véhicule (100), et
la détermination consistant à:
lorsque les informations d'erreur sont reçues, déterminer qu'une erreur associée à un système de fonctionnement du véhicule (100) ou une erreur associée à une fonction de conduite autonome du véhicule (100) s'est produite sur la base des informations d'erreur; et
sur la base de la détermination qu'une erreur associée au système de fonctionnement du véhicule (100) s'est produite, déterminer, par le serveur (800) que le véhicule (100) nécessite d'être commandé à distance.

2. Procédé de commande selon la revendication 1, les informations acquises étant des informations nécessaires pour la conduite du véhicule (100) en mode autonome, et
la détermination consistant à:
déterminer qu'une quantité des informations acquises soit égale ou supérieure au niveau prédéfini, déterminer, par le serveur (800) que le véhicule (100) nécessite d'être commandé à distance.

3. Procédé selon l'une quelconque des revendications 1 à 2, les informations acquises étant des informations transmises par le véhicule (100), et
la détermination consistant à:
déterminer qu'un écart existe entre les informations concernant la conduite du véhicule (100) mémorisées sur le serveur (800) et les informations transmises par le véhicule (100); et
sur la base de la détermination qu'un écart existe entre les informations concernant la conduite du véhicule (100) mémorisées sur le serveur (800) et les informations transmises par le véhicule (100), déterminer, par le serveur (800) que le véhicule (100) nécessite d'être commandé à distance.

4. Procédé de commande selon l'une quelconque des revendications 1 à 3,
les informations acquises transmises par le véhicule (100) comprenant des informations d'état du conducteur et des informations d'état de véhicule, et
la détermination consistant à:
déterminer, sur la base des informations d'état du conducteur, qu'un occupant du véhicule (100) n'est pas capable de conduire le véhicule (100) en mode manuel; et
sur la base de la détermination qu'un occupant du véhicule (100) n'est pas capable de conduite le véhicule (100) en mode manuel, déterminer que le véhicule (100) nécessite d'être commandé à distance;
et/ou
déterminer, sur la base des informations d'état de véhicule, qu'une erreur s'est produite au niveau d'une fonction de commande autonome du véhicule (100) en mode autonome; et
sur la base de la détermination que l'erreur s'est produite au niveau d'une fonction de conduite autonome du véhicule (100) en mode autonome, déterminer que le véhicule (100) nécessite d'être commandé à distance.

5. Procédé de commande selon l'une quelconque des revendications 1 à 4,
les informations acquises étant des informations transmises par l'objet à proximité, et
la détermination consistant à:
déterminer qu'une erreur associée à une fonction de conduite autonome du véhicule (100) s'est produite sur la base des informations transmises par l'objet à proximité; et
sur la base de la détermination qu'une erreur associée à une fonction de conduite autonome du véhicule (100) s'est produite, déterminer, par le serveur (800), que le véhicule (100) nécessite d'être commandé à distance.

6. Procédé de commande selon la revendication 1, l'objet à proximité comprenant un véhicule (902) à proximité ou une infrastructure (901) à une distance prédéfinie du véhicule (100), et la commande à distance consistant à:
déterminer, par le serveur (800), que le véhicule (902) à proximité ou l'infrastructure (901) a la capacité pour commander à distance le véhicule (100);
sur la base de la détermination que le véhicule (902) à proximité ou l'infrastructure (901) a la capacité de commander à distance le véhicule (100), demander, par le serveur (800), au véhicule (902) à proximité ou l'infrastructure (901) de commander à distance le véhicule (100); et
commander à distance le véhicule (100) par le dispositif (902) à distance ou l'infrastructure (901).

7. Procédé de commande selon la revendication 6, consistant à:
avant la demande, déterminer qui parmi le serveur (800), le véhicule (902) à proximité et l'infrastructure (100), dispose de la meilleure qualité de communication avec le véhicule (100); et
sur la base d'une détermination que le véhicule (902) à proximité ou l'infrastructure (901) a la meilleure qualité de communication avec le véhicule (100), demander, par le serveur (800), au véhicule (902) à proximité ou à l'infrastructure (901) de commander à distance le véhicule (100).

8. Procédé de commande selon la revendication 1, le véhicule (100) nécessitant d'être commandé à distance, et le procédé de commande consistant à:
avant de commander à distance, déterminer, par le serveur (800) qu'un occupant du véhicule (100) est capable de conduire le véhicule (100);
sur la base d'une détermination que l'occupant est capable de conduire le véhicule (100), commander, par le serveur (800), le véhicule (100) à amener une unité de sortie du véhicule (100) à fournir un menu de sélection de mode de conduite;
sur la base d'une détermination que le mode manuel est sélectionné par l'occupant à partir du mode de sélection de mode de conduite;
sur la base d'une détermination que le mode manuel est sélectionné à partir du menu de sélection de mode de conduite, commuter le véhicule (100) en mode manuel; et
sur la base d'une détermination que le mode de commande à distance est sélectionné à partir du mode de sélection de mode de conduite, commander à distance le véhicule (100) par le serveur (800).

9. Procédé de commande selon la revendication 8, consistant à:
avant la détermination qu'un occupant est capable de conduire le véhicule (100), déterminer, par le serveur (800), si le véhicule (100) est dans une situation d'urgence;
sur la base d'une détermination que le véhicule (100) est dans une situation d'urgence, commander à distance le véhicule (100) par le serveur (800); et
sur la base d'une détermination que le véhicule (100) n'est pas dans une situation d'urgence, déterminer si l'occupant est capable de conduire le véhicule (100).

10. Procédé de commande selon la revendication 1, consistant en outre à:
recevoir une commande de commutation en manuel; et
déterminer si un occupant du véhicule (100) est capable de conduire le véhicule (100);
sur la base d'une détermination que l'occupant n'est pas capable de conduire le véhicule (100), conserver la commande à distance du véhicule (100) par le serveur (800); et
sur la base d'une détermination que l'occupant est capable de conduire le véhicule (100), commuter le véhicule (100) du mode de commande à distance en mode manuel.

11. Procédé de commande selon la revendication 1, consistant à:
avant de commander à distance, déterminer que le serveur (800) n'est pas apte à commander à distance le véhicule (100);
sur la base de la détermination que le serveur (800) n'est pas apte à commander à distance le véhicule (100), procéder à une manœuvre d'urgence par le véhicule (100), et
pendant la réalisation de la manœuvre d'urgence par le véhicule (100), procéder à:
transmettre, par le véhicule (100) ou par le serveur (800), des informations concernant la manœuvre d'urgence à un véhicule à proximité (902) à une distance prédéfinie du véhicule (100); et
demander, par le véhicule (100) ou le serveur (800), au véhicule (902) à proximité de procéder à une commande coopérative.

12. Appareil conçu pour exécuter un procédé de commande selon l'une quelconque des revendications 1 à 11.
